(19) Europäisches Patentamt / European Patent Office / Office européen des brevets

(11) **EP 4 621 621 B1**

(12) **EUROPEAN PATENT SPECIFICATION**

(45) Date of publication and mention
of the grant of the patent:
**22.07.2026  Bulletin 2026/30**

(21) Application number: **25164962.0**

(22) Date of filing: **20.03.2025**

(51) International Patent Classification (IPC):
**G06F 21/57** (2013.01)   **H04L 9/08** (2006.01)
**H04L 9/14** (2006.01)

(52) Cooperative Patent Classification (CPC):
**G06F 21/57; H04L 9/0852; H04L 9/14;**
G06F 2221/033

(54) **METHOD AND SYSTEM FOR RECOMMENDING QUANTUM SAFE CRYPTOGRAPHIC OPERATIONS IN APPLICATIONS**

VERFAHREN UND SYSTEM ZUR EMPFEHLUNG QUANTENSICHERER KRYPTOGRAFISCHER OPERATIONEN IN ANWENDUNGEN

PROCÉDÉ ET SYSTÈME DE RECOMMANDATION D'OPÉRATIONS CRYPTOGRAPHIQUES À SÉCURITÉ QUANTIQUE DANS DES APPLICATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.03.2024  IN 202421021586**

(43) Date of publication of application:
**24.09.2025  Bulletin 2025/39**

(73) Proprietor: **Tata Consultancy Services Limited**
**Mumbai, Maharashtra 400 021 (IN)**

(72) Inventors:
- **SINGH DILIP THAKUR, Meena**
**560066 Bangalore, Karnataka (IN)**
- **ROY, Shubhro Shovan**
**700135 Kolkata, West Bengal (IN)**
- **ALASINGARA BHATTACHAR, Rajan Mindigal**
**560066 Bangalore, Karnataka (IN)**
- **GHAROTE, Mangesh Sharad**
**411057 Pune, Maharashtra (IN)**
- **SAHU, Pankaj Kumar**
**411057 Pune, Maharashtra (IN)**
- **VIDHANI, Kumar Mansukhlal**
**382009 Gandhinagar, Gujarat (IN)**
- **SYED, Habeeb Basha**
**500081 Hyderabad, Telangana (IN)**
- **LODHA, Sachin Premsukh**
**411057 Pune, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-B1- 11 218 300     US-B1- 11 727 829**

- **PANDEY ANOOP KUMAR ET AL: "Cryptographic Challenges and Security in Post Quantum Cryptography Migration: A Prospective Approach", 2023 IEEE INTERNATIONAL CONFERENCE ON PUBLIC KEY INFRASTRUCTURE AND ITS APPLICATIONS (PKIA), IEEE, 8 September 2023 (2023-09-08), pages 1 - 8, XP034434457, DOI: 10.1109/ PKIA58446.2023.10262706**

EP 4 621 621 B1

**Description**

CROSS-REFERENCE TO RELATED APPLICATIONS AND PRIORITY

The present application claims priority to Indian application no. Indian Patent Application No. 202421021586, filed on March 21, 2024.

TECHNICAL FIELD

The disclosure herein generally relates to the field of cybersecurity and, more particularly, to a method and system for recommending quantum safe cryptographic operations in applications.

BACKGROUND

Cryptography is the technique which is used for doing secure communication between two parties in the public environment where unauthorized users and malicious attackers are present. In cryptography there are two processes i.e. encryption and decryption performed at sender and receiver end respectively. Encryption is the process where a simple multimedia data is combined with some additional data (known as key) and converted into unreadable encoded format known as Cipher. Decryption is the reverse method as that of encryption where the same key is used to decode the cipher and it is converted into real multimedia data. Applications use crypto algorithms/classical crypto algorithms to enable confidentiality, integrity and availability of the enterprise systems and such applications are becoming vulnerable to quantum risk as quantum computers with sufficient qubits can break public key crypto systems and reduce the security of symmetric and asymmetric crypto systems to half. Hence, there is a need to migrate the classical crypto algorithms to Post Quantum Cryptographic (PQC) algorithms.

There are multiple post quantum algorithms with different security levels, key size and operations resulting in different time and memory requirements. However, some prior arts mainly focus on converting a piece of code for PQC or replace the existing code with PQC code. Some other prior arts focus on converting only vulnerable cryptographic data assets without considering optimization techniques. Hence there is a challenge in converting crypto code in applications from classical computers to PQC considering optimization. Patent document US11727829 B1 presents relevant background art.

SUMMARY

Embodiments of the present disclosure present technological improvements as solutions to one or more of the above-mentioned technical problems recognized by the inventors in conventional systems. For example, in one embodiment, a method for recommending quantum safe cryptographic operations in applications is provided. The method includes receiving, via one or more hardware processors, an application pipeline for Post Quantum Cryptography (PQC) conversion, wherein each of a plurality of applications associated with the application pipeline for PQC conversion comprises a plurality of application statements. Further, the method includes identifying, via the one or more hardware processors, a plurality of classical cryptographic schemes associated with each of the plurality of applications by analyzing an associated plurality of application statements and an associated plurality of enterprise objectives using an analyzer. Furthermore, the method includes identifying, via the one or more hardware processors, a plurality of potential classical cryptographic schemes for PQC conversion by mapping the plurality of classical cryptographic schemes associated with each of the plurality of application statements with a plurality of PQC schemes based on a plurality of application constraints, wherein the plurality of application constraints comprises an algorithm category, an associated security level and a risk value and, wherein the plurality of PQC schemes having similar algorithm category are selected only if (i) the associated security level is greater than a predefined security level threshold and (ii) the risk value greater than a predefined risk threshold. Furthermore, the method includes computing, via the one or more hardware processors, a PQC conversion limit for each of the plurality of applications based on the associated plurality of enterprise objectives using a proportional matching based limit setter. Furthermore, the method includes identifying, via the one or more hardware processors, a plurality of potential PQC schemes from among the plurality of PQC schemes based on a plurality of application related parameters only if the associated plurality of enterprise objectives is less than the computed PQC conversion limit, wherein a plurality of security levels and a plurality of risk values associated with the identified plurality of potential PQC schemes are obtained. Furthermore, the method includes iteratively selecting, via the one or more hardware processors, a potential PQC scheme from among the plurality of potential PQC schemes based on a plurality of constraints, wherein the plurality of constraints comprises the associated plurality of enterprise objectives, the security level and the risk value. Furthermore, the method includes obtaining, via the one or more hardware processors, an initial allocation for each of the plurality of applications by allocating each of the plurality of classical cryptographic schemes with the selected potential PQC scheme. Furthermore, the method includes iteratively obtaining, via the one or more hardware processors, an optimal PQC scheme for each of the plurality of classical cryptographic schemes by (i) varying the security level associated with each of the plurality of potential PQC schemes until the predefined security level threshold and (ii) by reducing enterprise objective values until the predefined objective threshold. Furthermore, the method includes updating, via the one or more hardware processors, the initial allocation for each of the plurality of applications with plurality of optimal PQC schemes. Finally, the method includes providing recommendations, via the one or more hardware processors, as an alternative to each of the plurality of classical cryptographic schemes based on the plurality of optimal PQC schemes using a recommendation system.

In another aspect, a recommending quantum safe cryptographic operations in applications is provided. The system includes at least one memory storing programmed instructions, one or more Input /Output (I/O) interfaces, and one or more hardware processors operatively coupled to the at least one memory, wherein the one or more hardware processors are configured by the programmed instructions to receive an application pipeline for Post Quantum Cryptography (PQC) conversion, wherein each of a plurality of applications associated with the application pipeline for PQC conversion comprises a plurality of application statements. Further, the one or more hardware processors are configured by the programmed instructions to identify, a plurality of classical cryptographic schemes associated with each of the plurality of applications by analyzing an associated plurality of application statements and an associated plurality of enterprise objectives using an analyzer. Furthermore, one or more hardware processors are configured by the programmed instructions to identify a plurality of potential classical cryptographic schemes for PQC conversion by mapping the plurality of classical cryptographic schemes associated with each of the plurality of application statements with a plurality of PQC schemes based on a plurality of application constraints, wherein the plurality of application constraints comprises an algorithm category, an associated security level and a risk value and, wherein the plurality of PQC schemes having similar algorithm category are selected only if (i) the associated security level is greater than a predefined security level threshold and (ii) the risk value greater than a predefined risk threshold. Furthermore, the one or more hardware processors are configured by the programmed instructions to compute, a PQC conversion limit for each of the plurality of applications based on the associated plurality of enterprise objectives using a proportional matching based limit setter. Furthermore, the one or more hardware processors are configured by the programmed instructions to identify, via the one or more hardware processors, a plurality of potential PQC schemes from among the plurality of PQC schemes based on a plurality of application related parameters only if the associated plurality of enterprise objectives is less than the computed PQC conversion limit, wherein a plurality of security levels and a plurality of risk values associated with the identified plurality of potential PQC schemes are obtained. Furthermore, the one or more hardware processors are configured by the programmed instructions to iteratively select a potential PQC scheme from among the plurality of potential PQC schemes based on a plurality of constraints, wherein the plurality of constraints comprises the associated plurality of enterprise objectives, the security level and the risk value. Furthermore, the one or more hardware processors are configured by the programmed instructions to obtain an initial allocation for each of the plurality of applications by allocating each of the plurality of classical cryptographic schemes with the selected potential PQC scheme. Furthermore, the one or more hardware processors are configured by the programmed instructions to iteratively obtain, an optimal PQC scheme for each of the plurality of classical cryptographic schemes by (i) varying the security level associated with each of the plurality of potential PQC schemes until the predefined security level threshold and (ii) by reducing enterprise objective values until the predefined objective threshold. Furthermore, the one or more hardware processors are configured by the programmed instructions to update the initial allocation for each of the plurality of applications with plurality of optimal PQC schemes. Finally, the one or more hardware processors are configured by the programmed instructions to provide recommendation, as an alternative to each of the plurality of classical cryptographic schemes based on the plurality of optimal PQC schemes using a recommendation system.

In yet another aspect, a computer program product including a non-transitory computer-readable medium embodied therein a computer program for recommending quantum safe cryptographic operations in applications is provided. The computer readable program, when executed on a computing device, causes the computing device to receive an application pipeline for Post Quantum Cryptography (PQC) conversion, wherein each of a plurality of applications associated with the application pipeline for PQC conversion comprises a plurality of application statements. Further, the computer readable program, when executed on a computing device, causes the computing device to identify, a plurality of classical cryptographic schemes associated with each of the plurality of applications by analyzing an associated plurality of application statements and an associated plurality of enterprise objectives using an analyzer. Furthermore, the computer readable program, when executed on a computing device, causes the computing device to identify a plurality of potential classical cryptographic schemes for PQC conversion by mapping the plurality of classical cryptographic schemes associated with each of the plurality of application statements with a plurality of PQC schemes based on a plurality of application constraints, wherein the plurality of application constraints comprises an algorithm category, an associated security level and a risk value and, wherein the plurality of PQC schemes having similar algorithm category are selected only if (i) the associated security level is greater than a predefined security level threshold and (ii) the risk value greater than a predefined risk threshold. Furthermore, the computer readable program, when executed on a computing device, causes the computing device to compute, a PQC conversion limit for each of the plurality of applications based on the associated plurality of enterprise objectives using a proportional matching based limit setter. Furthermore, the computer readable program, when executed on a computing device, causes the computing device to identify, via the one or more hardware processors, a plurality of potential PQC schemes from among the plurality of PQC schemes based on a plurality of application related parameters only if the associated plurality of enterprise objectives is less than the computed PQC conversion limit, wherein a plurality of security levels and a plurality of risk values associated with the identified plurality of potential PQC schemes are obtained. Furthermore, the computer readable program, when executed on a computing device, causes the computing device to iteratively select a potential PQC scheme from among the plurality of potential PQC schemes based on a plurality of constraints, wherein the plurality of constraints comprises the associated plurality of enterprise objectives, the security level and the risk value. Furthermore, the computer readable program, when executed on a computing device, causes the computing device to obtain an initial allocation for each of the plurality of applications by allocating each of the plurality of classical cryptographic schemes with the selected potential PQC scheme. Furthermore, computer readable program, when executed on a computing device, causes the computing device to iteratively obtain, an optimal PQC scheme for each of the plurality of classical cryptographic schemes by (i) varying the security level associated with each of the plurality of potential PQC schemes until the predefined security level threshold and (ii) by reducing enterprise objective values until the predefined objective threshold. Furthermore, the computer readable program, when executed on a computing device, causes the computing device to update the initial allocation for each of the plurality of applications with plurality of optimal PQC schemes. Finally, the computer readable program, when executed on a computing device, causes the computing device to provide recommendation, as an alternative to each of the plurality of classical cryptographic schemes based on the plurality of optimal PQC schemes using a recommendation system.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for recommending quantum safe cryptographic operations in applications, in accordance with some embodiments of the present disclosure.

FIG. 1B illustrates a broad level functional architecture of the system for recommending quantum safe cryptographic operations in applications, in accordance with some embodiments of the present disclosure.

FIG. 2A and FIG. 2B (also referred to as FIG. 2) illustrate a flow diagram for a processor implemented method for recommending quantum safe cryptographic operations in applications, in accordance with some embodiments of the present disclosure.

FIG. 3 illustrates an example flow diagram for algorithm category mapping for the processor implemented method for recommending quantum safe cryptographic operations in applications, in accordance with some embodiments of the present disclosure.

FIG. 4 illustrates an example flow diagram for limit setting for the processor implemented method for recommending quantum safe cryptographic operations in applications, in accordance with some embodiments of the present disclosure.

FIG. 5 illustrates an example flow diagram for optimal Post Quantum Cryptographic (PQC) allocation for the processor implemented method for recommending quantum safe cryptographic operations in applications, in accordance with some embodiments of the present disclosure.

FIG. 6 illustrates an example flow diagram for constraint compliance checking for the processor implemented method for recommending quantum safe cryptographic operations in applications, in accordance with some embodiments of the present disclosure.

FIG. 7 illustrates a sample application format used for experimenting the processor implemented method for recommending quantum safe cryptographic operations in applications, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

To overcome the challenges of the conventional approaches, embodiments herein provide a method and system for recommending quantum safe cryptographic operations in applications. The present disclosure paves way for transferring of application that are using classical cryptographic algorithms/operations (which are vulnerable to quantum attacks) to be replaced by appropriate post quantum cryptography algorithms/schemes/operations. Since Post Quantum Cryptographic (PQC) algorithms are more secure against quantum attacks, they result in more execution time and resource requirements. Hence, it becomes necessary to select those PQC algorithms that satisfy enterprise constraints on time and memory. Due to presence of various PQC algorithms and security levels with different key size and operations there is a requirement for recommender that can ensure optimal conversion from classical cryptographic schemes to PQC schemes at appropriate security levels. This lowers the risk and the selected PQC algorithms also satisfies the enterprise security requirements.

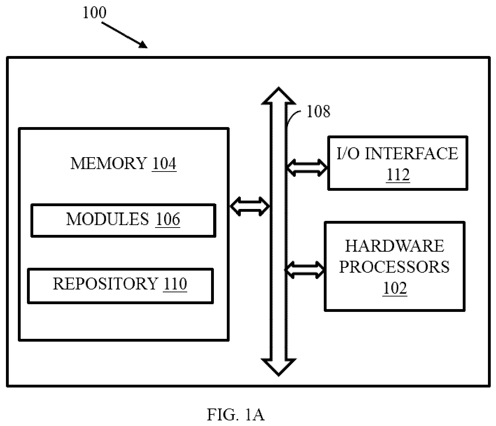

Referring now to the drawings, more particularly to FIG. 1A through FIG. 7, where similar reference characters denote corresponding features consistently throughout the figures, there are shown preferred embodiments, and these embodiments are described in the context of the following exemplary system and/or method.

FIG. 1A is a functional block diagram of a system 100 for recommending quantum safe cryptographic operations in applications, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

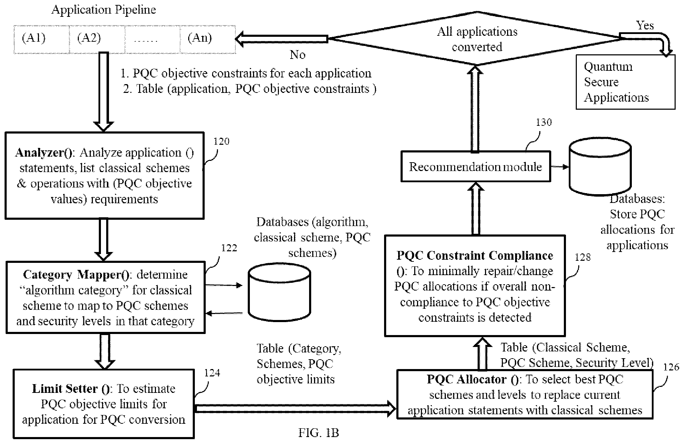

The plurality of modules 106 includes programs or coded instructions that supplement applications or functions performed by the system 100 for recommending quantum safe cryptographic operations in applications. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for recommending quantum safe cryptographic operations in applications. For example, the plurality of modules includes an analyzer module 120 (shown in FIG. 1B), a category mapper module 122 (shown in FIG. 1B), a limit setter module 124 (shown in FIG. 1B), a PQC allocator module 126 (shown in FIG. 1B), a PQC constraint compliance module 128 (shown in FIG. 1B) and a recommendation module 130 (shown in FIG. 1B).

FIG. 1B illustrates a broad level functional architecture for a processor implemented method for recommending quantum safe cryptographic operations in applications, in accordance with some embodiments of the present disclosure.

The data repository (or repository) 110 may include a plurality of abstracted pieces of code for refinement and data that is processed, received, or generated as a result of the execution of the plurality of modules in the module(s) 106.

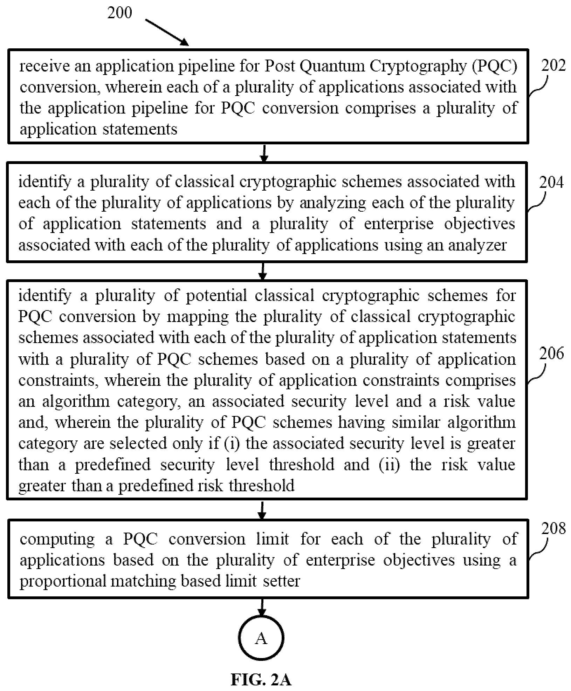

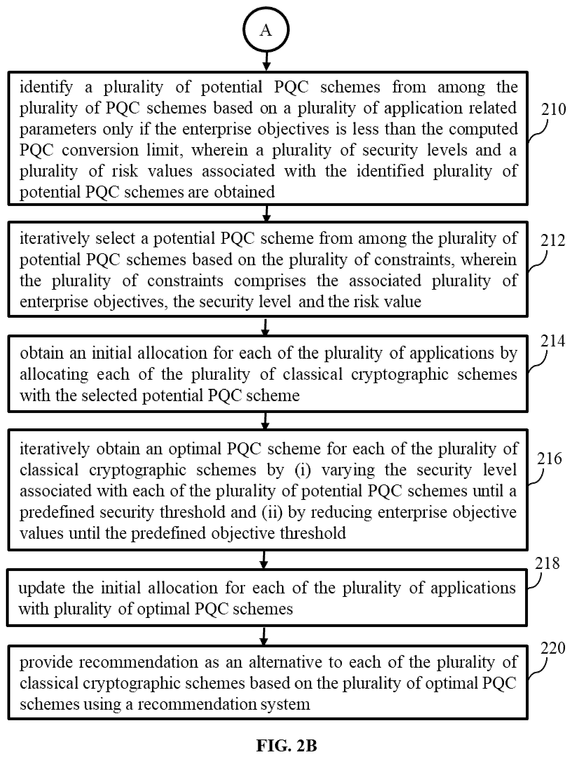

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). The working of the components of the system 100 are explained with reference to the method steps depicted in FIG. 2.

FIG. 2 is an exemplary flow diagrams illustrating a method 200 for recommending quantum safe cryptographic operations in applications implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and 1B and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. Method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of method 200, one or more hardware processors 102 are configured by the programmed instructions to receive an application pipeline for Post Quantum Cryptography (PQC) conversion, wherein each of a plurality of applications associated with the application pipeline for PQC conversion includes a plurality of application statements.

At step 204 of the method 200, the analyzer module 120 when executed by the one or more hardware processors 102 are configured by the programmed instructions to identify a plurality of classical cryptographic schemes associated with each of the plurality of applications by analyzing each of the plurality of application statements and a plurality of enterprise objectives associated with each of the plurality of applications using an analyzer. The plurality of enterprise objectives includes the execution time, an associated memory space occupied, a computation cost and a communication cost as given in equations (1) through (6).

$$Total\,Time \; = \; Communication\,Time \; + \; Execution\,Time \; + \; Security\,Time\ldots\ldots\ldots\ldots\ldots\ldots(1)$$

$$Communication\,Time \; = \frac{data}{Bandwidth}\ldots\ldots\ldots\ldots\ldots\ldots\ldots\ldots(2)$$

$$Execution\,Time \; = \frac{\eta(instructions)}{processing\,capacity\,of\,VM}\ldots\ldots\ldots\ldots\ldots\ldots(3)$$

$$Security\,Time \; = \frac{data}{security\,overhead}\ldots\ldots\ldots\ldots\ldots\ldots\ldots(4)$$

$$Communication\,cost \; = \; Communication\,Time \; * \; cost\,per\,unit\,VM\ldots\ldots\ldots\ldots\ldots(5)$$

$$Computation\,cost \; = \; Total\,Time \; * \; cost\,per\,unit\,VM\ldots\ldots(6)$$

For example, the plurality of classical cryptographic schemes includes RSA (Rivest Shamir, Adleman), ECDSA (Elliptic Curve Digital Signature Algorithm), SHA (Secure Hash Algorithm), AES (Advanced Encryption Standard), DES (Data Encryption Standard) and the like, used for the statements for that application. An application statement might involve a RSA call. The operations in RSA are keygen, encrypt, decrypt, (iii) information (if available) on time, memory, and other requirements for classical schemes used in the application statements.

At step 206 of the method 200, the category mapper module 122, when executed by the one or more hardware processors 102 is configured by the programmed instructions to identify a plurality of potential classical cryptographic schemes for PQC conversion by mapping the plurality of classical cryptographic schemes associated with each of the plurality of application statements with a plurality of PQC schemes based on a plurality of application constraints. For example, if the classical scheme is RSA, then category is "public key" and the available PQC options are (Kyber512, Kyber768, Kyber1024). A user/enterprise defined security criteria is considered for each conversion. If the classical scheme is ECDSA then the available PQC options are {Dilithium 2, Dilithium 3, Dilithium 5}. If the classical scheme is SHA, the available PQC options are {SHA 256, SHA 384, SHA 512}.

The plurality of application constraints includes an algorithm category, an associated security level and a risk value/score. The plurality of PQC schemes having similar algorithm category are selected only if (i) the associated security level is greater than a predefined security level threshold and (ii) the risk value greater than a predefined risk threshold as given in equation (7).

$$ exp - \left( A\left(\lambda_S - \lambda_{PQC}\right)t(S)\right) \geq security\ level\ threshold \ldots\ldots\ldots(7) $$

Where, A is mean arrival of attacks per unit time, $\lambda_S$ is required security for the code statement, $\lambda_{PQC}$ is security provided by the PQC scheme and t(S) is total (execution) time of the code statement. For example, the value of security level threshold is in the range of [0,1]. When the difference between required and provided security is higher, the value on the left side of the equation decreases, resulting in lower chances of satisfying the constraint. This means to ensure higher security, higher security levels are needed.

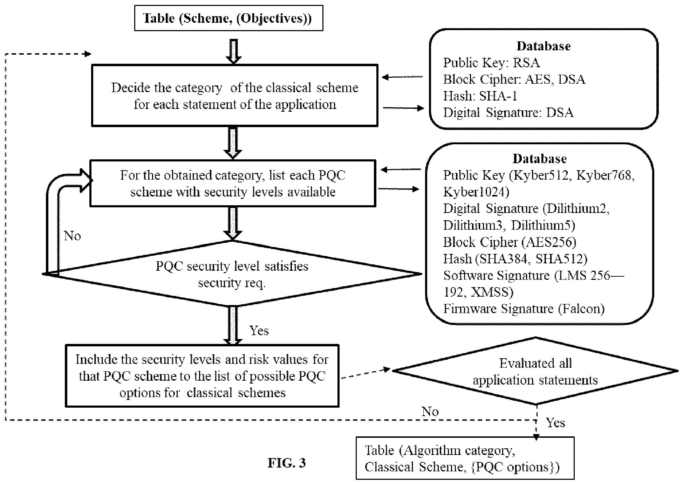

The steps for mapping the plurality of classical cryptographic schemes associated with each of the plurality of application statements with the plurality of PQC schemes based on the algorithm category using the category mapper is explained in conjunction with FIG. 3. The method included receiving the plurality of application statements associated with each of the plurality of applications. Further, a category associated with the plurality of classical schemes corresponding to each of the plurality of application statements are obtained using pattern matching technique. Finally, the plurality of PQC schemes, the associated security level and the associated risk value pertaining to each identified category are obtained based on a plurality of enterprise security requirements, wherein the plurality of enterprise security requirements comprise a mean arrival of attacks per unit time, a required security level of the code statement, a security level provided by the plurality of PQC schemes, a mandatory security threshold and an execution time of the code statement.

At step 208 of the method 200, the limit setter module 124 when executed by the one or more hardware processors 102 are configured by the programmed instructions to compute a PQC conversion limit for each of the plurality of applications based on the plurality of enterprise objectives using a proportional matching based limit setter.

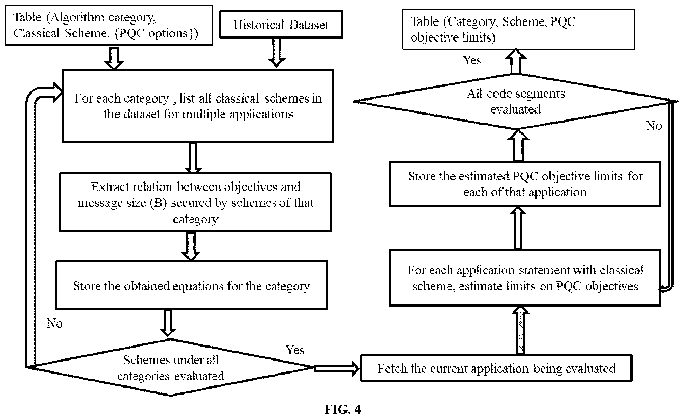

The steps for computing the PQC conversion limit for each of the plurality of applications based on the plurality of enterprise objectives using a proportional matching based limit setter is explained in conjunction with FIG. 4. Now referring to FIG. 4, initially, a dataset comprising a plurality of historical applications is received. The plurality of historical applications includes the plurality of classical cryptographic schemes used in those applications, an associated plurality of historical enterprise objectives and a statement size associated with each of a plurality of historical application statements. Further, clustering is performed on the plurality of classical cryptographic schemes associated with the plurality historical applications based on a plurality of cryptographic algorithmic categories ($C_K$).

For example, if Category: Public Key, Classical Scheme: RSA, PQC options: {Kyber 512, Kyber 768, Kyber 1024}. Similarly, if Category: Digital Signature, Classical Scheme: ECDSA, PQC options: {Dilithium 2, Dilithium 3, Dilithium 5}. If Category: Hashing, Classical Scheme: SHA, PQC options: {SHA 256, SHA 384, SHA 512}. Further, a plurality of relationship information is extracted for each of a plurality of category clusters. For example, a plurality of relationships between objectives {r.time, r.mem,...} and message size related to application statement (B) are obtained. The equations include coefficients for the equations for time $\{C_1^t,\ C_2^t, ...\}$, memory $\{C_1^m,\ C_2^m, ...\}$, the constants $\{Y_t,\ Y_m, ...\}$ $\{\varepsilon_t, \varepsilon_m, ...\}$. For example, the relationship information is represented in the form of equations as shown in equation (8) and (9).

$$ r.time =\ C_1^t(B)^1 + C_2^t(B)^2 + \cdots + C_\emptyset^t(B^\emptyset) + Y_t + \in_t\ \ldots\ (8) $$

$$ r.time =\ C_1^m(B)^1 + C_2^m(B)^2 + \cdots + C_\emptyset^m(B^\emptyset) + Y_m + \in_m\ \ldots(9) $$

The relationship information is extracted between the plurality of historical enterprise objectives and the associated statement size (B). Finally, the PQC conversion limit for each of the plurality of applications is computed by dividing each of the plurality of relationship information by a sum of the plurality of relationship information associated with the corresponding application as shown in equations (4) and (5). Here, $C(T)$ is time constraint for application in PQC, $C(M)$ is memory constraint for an application after PQC conversion. Here, $e.\ time_{Schl}$ is estimated execution time limit for the statement post PQC conversion and $e.\ mem_{Schl}$ is estimated memory limit for the statement post PQC conversion.

$$e.time_{SchI} = \left(\frac{r.time_{SchI}}{\sum_{I=1}^{S} r.time_{SchI}}\right) * C(T) \dots\dots\dots\dots\dots\dots\dots\dots(10)$$

$$e.mem_{SchI} = \left(\frac{r.mem_{SchI}}{\sum_{I=1}^{S} r.mem_{SchI}}\right) * C(M) \dots\dots\dots\dots\dots\dots\dots\dots(11)$$

At step 210 of the method 200, the PQC allocator module 126 when executed by the one or more hardware processors 102 are configured by the programmed instructions to identify a plurality of potential PQC schemes from among the plurality of PQC schemes based on a plurality of application related parameters only if the enterprise objectives is less than the computed PQC conversion limit, wherein the plurality of security levels and the plurality of risk values associated with the identified plurality of potential PQC schemes are obtained.

At step 212 of the method 200, the PQC allocator module 126 when executed by the one or more hardware processors 102 are configured by the programmed instructions to iteratively select a potential PQC scheme from among the plurality of potential PQC schemes based on the plurality of constraints, wherein the plurality of constraints comprises the plurality of enterprise objectives, the security level and the risk value.

At step 214 of the method 200, the PQC allocator module 126 when executed by the one or more hardware processors 102 are configured by the programmed instructions to obtain an initial allocation for each of the plurality of applications by allocating each of the plurality of classical cryptographic schemes with the selected potential PQC scheme.

At step 216 of the method 200, the PQC allocator module 126 and PQC constraint compliance module 128 when executed by the one or more hardware processors 102 are configured by the programmed instructions to iteratively obtain an optimal PQC scheme for each of the plurality of classical cryptographic schemes by (i) varying security level associated with each of the plurality of potential PQC schemes until a predefined security threshold and (ii) by reducing the enterprise objective values until the predefined objective threshold.

At step 218 of the method 200, the PQC allocator module 126 when executed by the one or more hardware processors 102 are configured by the programmed instructions to update the initial allocation for each of the plurality of applications with plurality of optimal PQC schemes.

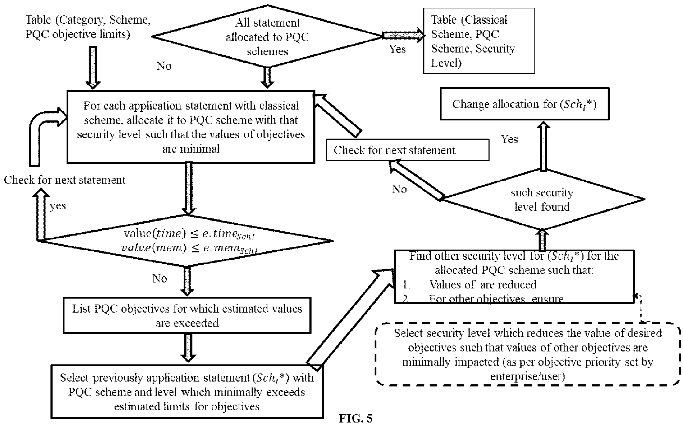

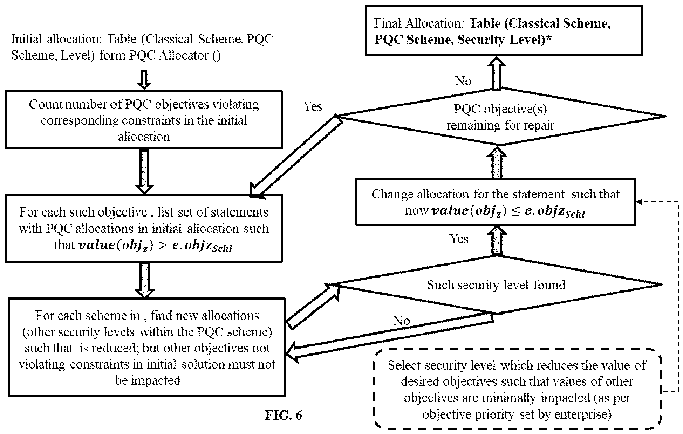

The PQC allocator module is explained in conjunction with FIG. 5 and the and the constraint compliance module is explained in conjunction with FIG. 6. Now referring to FIG. 5, each of the plurality of application statements with classical schemes, a PQC option (PQC scheme and security level) is selected from a plurality of PQC schemes which satisfies the predefined security threshold, risk values and results in minimal values of enterprise objectives by a ranking based distance computation method. For example, in case of NIST (National Institute of Standard and Technology) PQC algorithm the different security levels includes 1 to 5.

where the selection of the most optimal PQC option from a plurality of options filtered based on pre-defined security threshold and risk values is done by evaluating the objective values of each PQC option and constructing an ideal solution by taking the minimal value of each objective with enterprise defined priorities, and the PQC option which is at minimal distance from the ideal solution is selected. For each application statement from among a plurality of statements and for the selected PQC option, the values of objectives are compared with estimated values of the objectives given by the limit setter such that, for values of the selected PQC option exceeding estimated values for an application statement, another application statement is chosen from among a plurality of statements such that for the second statement, a PQC option has been already selected and the objective values given by the corresponding PQC option (for the second statement) minimally exceeds estimated limits in terms of number of objectives and magnitude thereby changing the selection of PQC option for the second statement with a new PQC option from among a plurality of options in the filtered table (filtered based on pre-defined security threshold and risk values) such that the new PQC option leads to reduction in values for those objectives for which the selected PQC option for the first statement has exceeded corresponding estimated limits while restricting the increase in value of other objectives for the second statement within permitted thresholds.

Now referring to FIG. 6, for each of the plurality of objectives found to violate its corresponding constraints in the PQC allocation solution, a plurality of allocations is selected from the PQC allocation solution which exceed estimated limits for each of the plurality of objectives whereby, for each of the plurality of such allocations other PQC options belonging to the same PQC scheme is searched and selected from the filtered table (filtered based on predefined security threshold and risk value) such that this PQC option lowers the value of each of the plurality of objectives violating their constraints in the allocation solution, provided that other objectives not violating corresponding constraints in allocation solution do not violate their constraints now and, changing these allocations with the selected PQC schemes till the value of the objectives are reduced/lowered such that constraints are not violated.

At step 220 of the method 200, the recommendation module 130 when executed by the one or more hardware processors 102 are configured by the programmed instructions to provide recommendation to each of the plurality of classical cryptographic schemes based on the plurality of optimal PQC schemes using a recommendation system.

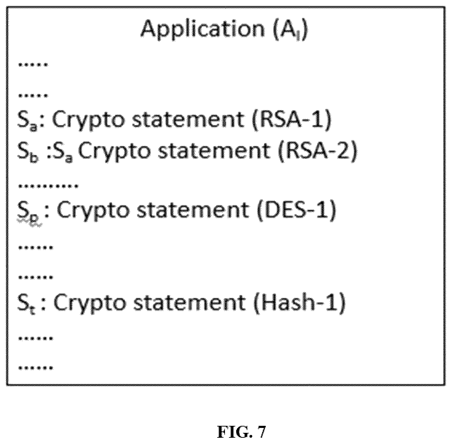

**Experimentation:** Considering three sample applications: spring-crypto-utils-1.3.4, 1.3.5, 1.3.6, shown in Table 1, wherein each application has a format shown in Fig 7. The crypto statements in the application are associated with classical cryptographic schemes like RSA, ECDSA, DES, SHA, MAC, AES. It was assumed that each of the statements has message size between [5 KB, 5 MB]. The instructions associated in the statement lie in the range [5000, 50000] Million Instructions. The processor used to execute these statements are AWS EC2 VM series. The data transfer bandwidth is 0.1 GB/s. These values are obtained based on benchmark data in (Li et al., 2016). All parameters are configurable as the recommender model is highly generalized.

It is assumed in the experiments that each statement in the application requires highest security. Each application in the pipeline is assumed to have a risk score: $Risk(A_i)$. The risk scores for each application is provided as input to the recommender using the methods mentioned in patent (Application No 202321067239, titled METHODS AND SYSTEMS FOR ESTIMATING RISK OF ENTERPRISE APPLICATION FOR QUANTUM CRYPTOGRAPHY MIGRATION, filed on October 6 2023). For all applications in the pipeline, normalized risk scores/values are obtained using equations (12) and (13):

$$\mathrm{norm}_{\mathrm{r}(A_i)} = \frac{Risk(A_i)}{\max(Risk(A_i))} \quad \dots\dots\dots\dots\dots\dots\dots\dots(12)$$

$$sec_i = \mathrm{norm}_{\mathrm{r}(A_i)} \quad\quad\quad \dots\dots\dots\dots\dots\dots\dots(13)$$

Explanation: For application with higher risk score, the vulnerability is higher. Hence the required security level threshold is kept higher. The normalized values are substituted as security threshold for the application to be used as filtering PQC security levels for each classical scheme in the application (used in category mapper). For example: Consider three applications in the pipeline (spring-crypto-utils-1.3.4, 1.3.5, 1.3.6) shown in Table 1. The number of classical schemes for each application is: RSA (18), ECDSA {Sign, Verify} (3), DES (18), SHA (9), MAC (9), AES (0).

**Table 1**

| Applications | Risk scores | Normalized values |
|---|---|---|
| spring-crypto-utils-1.3.4 | 1.9 | 1.0 |
| spring-crypto-utils-1.3.5 | 0.84 | 0.42 |
| spring-crypto-utils-1.3.6 | 1.66 | 0.87 |

In an embodiment, each of the statements in an application is considered to require a minimal security threshold for that application while selecting PQC scheme and security levels. For example, each statement in spring-crypto-utils-1.3.4, spring-crypto-utils-1.3.5, spring-crypto-utils-1.3.6 has minimal security thresholds of 1.0, 0.42, 0.87.

If there arrive new applications with higher risk scores than spring-crypto-utils-1.3.4, then the value of max($Risk(A_i)$) changes and this consequently changes the value of normalized scores for the applications in the pipeline. This strategy helps to always select stronger security for the current application with the highest risk score in the pipeline.

If historic data on the category level usage for each of these applications are available, generalized relationships between objectives and statement size with classical schemes are obtained by equations (8), (9) for each application. Otherwise, equations (1) to (6) can be used to obtain objective values for each statement with classical schemes for each application in the pipeline. Once the objective values for each statements for each application using classical schemes are determined, equations (10), (11) are used to obtain estimated limits on these objectives.

The results obtained for the above experimentation is explained as follows: Considering any instance of the application spring-crypto-utils. The number of classical schemes for each application is: RSA (18), ECDSA {Sign, Verify} (3), DES (18), SHA (9), MAC (9), AES (0). Mean attack arriving per unit time slot (time slot is generally an hour for VMs) is used to obtain security threshold (equation 7). The value is kept 1. Total execution time for running sample application spring-crypto-utils-1.3.4 with classical schemes is 198 seconds (obtained by equation (1)). The different values of security level threshold are set by application owner as given in Table 2.

**Table 2**

| Input: Security level threshold | Input: Classical Schemes | Output: Recommended PQC Schemes | PQC Total Exec Time (sec), Memory (KB), Comm cost ($), Comp Cost ($) |
|---|---|---|---|
| 0.999 | RSA, , ECDSA DES, SHA, MAC | Kyber 1024, Dilithium 5, AES 256, SHA-512, SHA-512 | 392, 1708.83, 0.15, 19.12 |
| 0.9 | RSA, ECDSA, DES, SHA, MAC | Kyber 1024, Dilithium 5, AES 192, SHA-384, SHA-384 | 391, 1702.17, 0.15, 19.12 |
| 0.8 | RSA, ECDSA , DES, SHA, MAC | Kyber 1024, Dilithium 5, AES 192, SHA-384, SHA-384 | 391, 1702.17, 0.15, 19.12 |
| 0.7 | RSA, ECDSA , DES, SHA, MAC | Kyber 768, Dilithium 5, AES 192, SHA-256, SHA-256 | 371, 1385.00, 0.15, 19.12 |
| 0.6 | RSA, ECDSA, DES, SHA, MAC | Kyber 768, Dilithium 3, AES 192, SHA-256, SHA-256 | 309, 1253.37, 0.14, 19.11 |
| 0.5 | RSA, ECDSA, DES, SHA, MAC | Kyber 512, Dilithium 2, AES 192, SHA-256, SHA-256 | 269, 892.71, 0.14, 19.11 |
| 0.4 | RSA, ECDSA, DES, SHA, MAC | Kyber 512, Dilithium 2, AES 192, SHA-256, SHA-256 | 269, 892.71, 0.14, 19.11 |
| 0.3 | RSA, ECDSA, DES, SHA, MAC | Kyber 512, Dilithium 2, AES 192, SHA-256, SHA-256 | 269, 892.71, 0.14, 19.11 |
| 0.2 | RSA, ECDSA, DES, SHA, MAC | Kyber 512, Dilithium 2, AES 192, SHA-256, SHA-256 | 269, 892.71, 0.14, 19.11 |
| 0.1 | RSA, ECDSA, DES, SHA, MAC | Kyber 512, Dilithium 2, AES 192, SHA-256, SHA-256 | 269, 892.71, 0.14, 19.11 |

Further, obtaining a deadline for PQC conversion for a given application is analyzed using Table 3. Application name is spring-crypto-utils-1.3.4. Permitted vulnerability (%) = 0. Mean attacks arriving per unit time = 1. The number of classical schemes for each application is = RSA (18), ECDSA { Sign, Verify} (3), DES (18), SHA (9), MAC (9), AES (0). Total execution time with classical schemes = 198s. From the observations given in Table 3, it is observed that the deadline should be at least 400s.

**Table 3**

| Input: Deadline (s) | Input: Classical schemes | Output: Recommended PQC schemes | Post PQC conversion: Total Execution Time (S), Memory (KB), Comm cost ($), Comp Cost ($) |
|---|---|---|---|
| 200 | RSA, ECDSA, DES, SHA, MAC | Kyber 1024, Dilithium 5, AES 192, SHA-384, SHA-384 | 391, 1702.17, 0.15, 19.12 |
| 300 | RSA, ECDSA, DES, SHA, MAC | Kyber 1024, Dilithium 5, AES 192, SHA-384, SHA-384 | 391, 1702.17, 0.15, 19.12 |
| 400 | RSA, ECDSA, DES, SHA, MAC | Kyber 1024, Dilithium 5, AES 192, SHA-384, SHA-384 | 391, 1702.17, 0.15, 19.12 |
| 500 | RSA, ECDSA, DES, SHA, MAC | Kyber 1024, Dilithium 5, AES 192, SHA-384, SHA-384 | 391, 1702.17, 0.15, 19.12 |

In an embodiment, the PQC conversion for three applications are compared as shown in Table 4. Application name = spring-crypto-utils-1.3.4, spring-crypto-utils-1.3.5, spring-crypto-utils-1.3.6. Permitted vulnerability (%) = 0. Mean attacks arriving per unit time = 1. Deadline = 400s. The number of classical schemes for each application is = RSA (18), ECDSA {Sign, Verify} (3), DES (18), SHA (9), MAC (9), AES (0). From Table 4, it was observed that for applications with higher normalized scores in the pipeline, i.e. for applications with higher risk scores, higher security levels are selected which gives higher resource utilization overheads.

**Table 4**

| Input: Applications | Input: Classical schemes | Output: Recommended PQC schemes | Post PQC conversion: Total Execution Time (S), Memory (KB), Comm cost ($), Comp Cost ($) |
|---|---|---|---|
| spring-crypto-utils-1.3.4 | RSA, ECDSA, DES, SHA, MAC | Kyber 1024, Dilithium 5, AES 256, SHA-512, SHA-512 | 392, 1708.83, 0.15, 19.12 |
| spring-crypto-utils-1.3.5 | RSA, ECDSA, DES, SHA, MAC | Kyber 512, Dilithium 2, AES 192, SHA-256, SHA-256 | 269, 892.71, 0.14, 19.11 |
| spring-crypto-utils-1.3.6 | RSA, ECDSA, DES, SHA, MAC | Kyber 1024, Dilithium 5, AES 192, SHA-384, SHA-384 | 391, 1702.17, 0.15, 19.12 |

Further, impact of vulnerability in the system is compared using Table 5. Application name: spring-crypto-utils-1.3.4. Deadline = 400s. Mean attacks arriving per unit time = 1. The number of classical schemes for each application is: RSA (18), ECDSA {Sign, Verify} (3), DES (18), SHA (9), MAC (9), AES (0). Total execution time with classical schemes = 198s. Now referring to Table 5, it was observed that the recommender helps to understand relative vulnerability of an application compared to other applications, when lower security levels are selected.

**Table 5**

| Input: Permitted Vulnerability (%) | Input: Classical schemes | Output: Recommended PQC schemes | Post PQC conversion: Total Execution Time (S), Memory (KB), Comm cost ($), Comp Cost ($) |
|---|---|---|---|
| 5 | RSA, ECDSA, DES, Hash, MAC | Kyber 1024, Dilithium 5, AES 256, SHA-512, SHA-512 | 392, 1708.83, 0.15, 19.12 |
| 10 | RSA, ECDSA, DES, SHA, MAC | Kyber 1024, Dilithium 5, AES 192, SHA-384, SHA-384 | 391, 1702.17, 0.15, 19.12 |
| 20 | RSA, ECDSA, DES, SHA, MAC | Kyber 1024, Dilithium 5, AES 192, SHA-384, SHA-384 | 391, 1702.17, 0.15, 19.12 |
| 30 | RSA, ECDSA, DES, SHA, MAC | Kyber 768, Dilithium 5, AES 192, SHA-256, SHA-256 | 371, 1385.00, 0.15, 19.12 |

Further, the impact of vulnerability for different schemes in the application are compared using Table 6. Here, the application name is spring-crypto-utils-1.3.4. Deadline = 400s. Mean attacks arriving per unit time = 1. The number of classical schemes for each application is: RSA (18), ECDSA {Sign, Verify} (3), DES (18), SHA (9), MAC (9), AES (0). Total execution time with classical schemes 198s. Now referring to Table 6, it was observed that the permitted vulnerability is between [0, 20] %. For most classical schemes, the highest PQC levels get selected. When permitted vulnerability for some schemes is permitted to some extent, lower security levels are selected, such that overhead is low.

**Table 6**

| Input: Classical schemes, Permitted Vulnerability (%) | Output: Recommended PQC schemes | Post PQC conversion: Total Execution Time (S) , Memory (KB), Comm cost ($), Comp Cost ($) |
|---|---|---|
| RSA(20), ECDSA(0), DES(0), SHA(0), MAC(0) | Kyber 1024, Dilithium 5, AES 256, SHA-512, SHA-512 | 392, 1708.83, 0.15, 19.12 |
| RSA(20), ECDSA(20), DES(0), SHA(0), MAC(0) | Kyber 1024, Dilithium 5, AES 256, SHA-512, SHA-512 | 392, 1708.83, 0.15, 19.12 |
| RSA(20), ECDSA(20), DES(20), SHA(0), MAC(0) | Kyber 1024, Dilithium 5, AES 192, SHA-512, SHA-512 | 375, 1500.05, 0.15, 19.12 |
| RSA(20), ECDSA(20), DES(20), SHA(20), MAC(0) | Kyber 1024, Dilithium 5, AES 192, SHA-384, SHA-384 | 371, 1385.00, 0.15, 19.12 |
| RSA(20), ECDSA(20), DES(20), SHA(20), MAC(20) | Kyber 1024, Dilithium 5, AES 192, SHA-384, SHA-384 | 371, 1385.00, 0.15, 19.12 |

Further, it was experimented to obtain recommended PQC scheme for an application directly from the conversion result of another application. Here, the application considered is spring-crypto-utils-1.3.4. Deadline = 400s. Mean attacks arriving per unit time = 1. The number of classical schemes for each application is: RSA (18), ECDSA {Sign, Verify} (3), DES (18), SHA (9), MAC (9), AES (0). Total execution time with classical schemes = 198s. Now referring to Table 7, permitted vulnerability of 50% is considered unsafe. But if a new application arrives with normalized score half of that of the spring-crypto-utils-1.3.4, then one can directly use the recommendation of the first row without any computation.

**Table 7**

| Input: Deadline (s), Permitted Vulnerability (%) | Input: Classical schemes | Output: Recommended PQC schemes | Post PQC conversion: Total Execution Time (S), Memory (KB), Comm cost ($), Comp Cost ($) |
|---|---|---|---|
| (300, 50) | RSA, ECDSA , DES, SHA, MAC | Kyber 512, Dilithium 2, AES 192, SHA-256, SHA-256 | 269, 892.71, 0.14, 19.11 |
| (400, 10) | RSA, ECDSA, DES, SHA, MAC | Kyber 1024, Dilithium 5, AES 192, SHA-384, SHA-384 | 391, 1702.17, 0.15, 19.12 |
| (500, 0) | RSA, ECDSA, DES, SHA, MAC | Kyber 1024, Dilithium 5, AES 192, SHA-512, SHA-512 | 391, 1702.17, 0.15, 19.12 |

Further, the different values of mean arrival of attack and the PQC recommendation are compared using Table 8. Application name is spring-crypto-utils-1.3.4. Permitted vulnerability (%) = 0. Deadline = 400s. The number of classical schemes for each application is: RSA (18), ECDSA { Sign, Verify} (3), DES (18), SHA (9), MAC (9), AES (0). Now referring to Table 8, it was observed that, when the mean arrival of attacks per unit time increases, higher security levels are recommended with higher overheads.

**Table 8**

| Input: Mean arrival of attacks | Input: Classical schemes | Output: Recommended PQC schemes | Post PQC conversion: Total Execution Time (S), Memory (KB), Comm cost ($), Comp Cost ($) |
|---|---|---|---|
| 0 | RSA, ECDSA, DES, SHA, MAC | Kyber 512, Dilithium 2, AES 192, SHA-256, SHA-256 | 269, 892.71, 0.14, 19.11 |
| 1 | RSA, ECDSA, DES, SHA, MAC | Kyber 1024, Dilithium 5, AES 192, SHA-384, SHA-384 | 391, 1702.17, 0.15, 19.12 |
| 2 | RSA, ECDSA, DES, SHA, MAC | Kyber 1024, Dilithium 5, AES 256, SHA-512, SHA-512 | 392, 1708.83, 0.15, 19.12 |
| 2.5 | RSA, ECDSA, DES, SHA, MAC | Kyber 1024, Dilithium 5, AES 256, SHA-512, SHA-512 | 392, 1708.83, 0.15, 19.12 |

Furthermore, the performance of processor speed with post PQC conversion execution time is analyzed using Table 9. Application name = spring-crypto-utils-1.3.4. Deadline = 400s. Mean attacks arriving per unit time =1. The number of classical schemes for each application is: RSA (18), ECDSA { Sign, Verify} (3), DES (18), SHA (9), MAC (9), AES (0). Total execution time with classical schemes: 198s. Recommended PQC conversion: Mapping: Kyber 1024, Dilithium 5, AES 192, SHA-384, SHA-384. Now referring to Table 9, it was observed that, to reduce overhead (like Total Execution Time and increase in overheads like VM memory, communication and computation costs) for applications with highest normalized scores and permitted vulnerability = 0%, one can migrate to higher processing capacity VM.

**Table 9**

| VM types | Processing Capacity (MIPS) | Memory VM (GiB) | Post PQC conversion: Total Execution Time (S), Memory (KB), Comm cost ($), Comp Cost ($) |
|---|---|---|---|
| c3.large | 8800 | 3.75 | 391, 1702.17, 0.15, 19.12 |
| c3.xlarge | 17600 | 7.5 | 301, 1708.83, 0.3, 19.26 |
| c3.2xlarge | 35200 | 15 | 255, 1708.83, 0.6, 19.56 |
| c3.4xlarge | 70400 | 30 | 233, 1708.83, 1.18, 20.16 |
| c3.8xlarge | 140800 | 60 | 221, 1708.83, 2.37, 21.34 |

The recommendation given by the recommender is given in Table 10. Here, the application considered is spring-crypto-utils-1.3.4. Permitted vulnerability (%) = 0. Mean attacks arriving per unit time = 1. The number of classical schemes for each application is: RSA (18), ECDSA {Sign, Verify} (3), DES (18), SHA (9), MAC (9), AES (0). Total execution time with classical schemes: 198s. Deadline = 500s. The results are obtained for different sets of input values generated randomly in the same data range.

**Table 10**

| Observation | Input: Classical Schemes | Output: Recommended PQC Schemes | Post PQC conversion: Total Execution Time (S), , Memory (KB), Comm cost ($), Comp Cost ($) |
|---|---|---|---|
| Observation 1 | RSA, ECDSA, DES, SHA, MAC | Kyber 1024, Dilithium 5, AES 192, SHA-384, SHA-384 | 403.28, 1708.83, 1.16, 21.24 |
| Observation 2 | RSA, ECDSA, DES, SHA, MAC | Kyber 1024, Dilithium 5, AES 192, SHA-384, SHA-384 | 428.34, 1708.83, 1.16, 21.6 |

(continued)

| Observation | Input: Classical Schemes | Output: Recommended PQC Schemes | Post PQC conversion: Total Execution Time (S), , Memory (KB), Comm cost ($), Comp Cost ($) |
|---|---|---|---|
| Observation 3 | RSA, ECD-SA, DES, SHA, MAC | Kyber 1024, Dilithium 5, AES 192, SHA-384, SHA-384 | 463.77, 1708.83, 0.13, 18.95 |
| Observation 4 | RSA, ECDSA, DES, SHA, MAC | Kyber 1024, Dilithium 5, AES 192, SHA-384, SHA-384 | 437.04, 1708.33, 0.16, 18.6 |
| Observation 5 | RSA, ECDSA, DES, SHA, MAC | Kyber 1024, Dilithium 5, AES 192, SHA-384, SHA-384 | 334.35, 1708.83, 0.17, 19.7 |
| Observation 6 | RSA, ECDSA, DES, SHA, MAC | Kyber 1024, Dilithium 5, AES 192, SHA-384, SHA-384 | 462.62, 1708.83, 0.19, 18. 88 |
| Observation 7 | RSA, ECDSA, DES, SHA, MAC | Kyber 1024, Dilithium 5, AES 192, SHA-384, SHA-384 | 391.00, 1708.83, 0.17, 20.59 |
| Observation 8 | RSA, ECDSA, DES, SHA, MAC | Kyber 1024, Dilithium 5, AES 192, SHA-384, SHA-384 | 487.99, 1708.83, 0.17, 17.86 |
| Observation 9 | RSA, ECDSA, DES, SHA, MAC | Kyber 1024, Dilithium 5, AES 192, SHA-384, SHA-384 | 296.09, 1708.83, 0.14, 16.4 |
| Observation 10 | RSA, ECDSA, DES, SHA, MAC | Kyber 1024, Dilithium 5, AES 192, SHA-384, SHA-384 | 485.18, 1708.83, 0.19, 19.34 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of recommending quantum safe cryptographic operations in applications. The present disclosure helps to recommend application code currently using any classical cryptographic algorithms to PQC algorithms. The set of PQC algorithms can be extended in future. The recommender of the present disclosure can decide allocation for new PQC algorithms without the need of separately running such algorithms to understand time, memory, cost requirements. Any new application can be input for PQC recommendation and conversion by estimating the time, memory and cost requirements based on message size. The recommendation using a simultaneous PQC allocation and localized repair approach to keep the time, memory and cost requirements within bounds without extensively checking all allocation combination. The final repair procedure also helps in constraint satisfaction by minimal allocation changes and reducing search time.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (200), the method comprising:

   receiving (202), via one or more hardware processors, an application pipeline for Post Quantum Cryptography (PQC) conversion, wherein each of a plurality of applications associated with the application pipeline for PQC conversion comprises a plurality of application statements;
   identifying (204), via the one or more hardware processors, a plurality of classical cryptographic schemes associated with each of the plurality of applications by analyzing an associated plurality of application statements and an associated plurality of enterprise objectives using an analyzer;
   identifying (206), via the one or more hardware processors, a plurality of potential classical cryptographic schemes for PQC conversion by mapping the plurality of classical cryptographic schemes associated with each of the plurality of application statements with a plurality of PQC schemes based on a plurality of application constraints, wherein the plurality of application constraints comprises an algorithm category, an associated security level and a risk value and, wherein the plurality of PQC schemes having similar algorithm category are selected only if (i) the associated security level is greater than a predefined security level threshold and (ii) the risk value greater than a predefined risk threshold;
   computing (208), via the one or more hardware processors, a PQC conversion limit for each of the plurality of applications based on the associated plurality of enterprise objectives using a proportional matching based limit setter;
   identifying (210), via the one or more hardware processors, a plurality of potential PQC schemes from among the plurality of PQC schemes based on a plurality of application related parameters only if the associated plurality of enterprise objectives is less than the computed PQC conversion limit, wherein a plurality of security levels and a plurality of risk values associated with the identified plurality of potential PQC schemes are obtained;
   iteratively selecting (212), via the one or more hardware processors, a potential PQC scheme from among the plurality of potential PQC schemes based on a plurality of constraints, wherein the plurality of constraints comprises the associated plurality of enterprise objectives, the security level and the risk value;
   obtaining (214), via the one or more hardware processors, an initial allocation for each of the plurality of applications by allocating each of the plurality of classical cryptographic schemes with the selected potential PQC scheme;

iteratively obtaining (216), via the one or more hardware processors, an optimal PQC scheme for each of the plurality of classical cryptographic schemes by (i) varying the security level associated with each of the plurality of potential PQC schemes until the predefined security level threshold and (ii) by reducing enterprise objective values until the predefined objective threshold;

updating (218), via the one or more hardware processors, the initial allocation for each of the plurality of applications with plurality of optimal PQC schemes; and

providing recommendation (220), via the one or more hardware processors, as an alternative to each of the plurality of classical cryptographic schemes based on the plurality of optimal PQC schemes using a recommendation system.

2. The method as claimed in claim 1, wherein the plurality of enterprise objectives comprises an execution time, an associated memory space occupied, a computation cost and a communication cost.

3. The method as claimed in claim 1, wherein the application related parameters comprises a statement size associated with each of the plurality of application statements and the plurality of classical cryptographic schemes.

4. The method as claimed in claim 1, wherein the steps for mapping the plurality of classical cryptographic schemes associated with each of the plurality of application statements with the plurality of PQC schemes based on the algorithm category using a category mapper comprises:

receiving the plurality of application statements associated with each of the plurality of applications;

identifying a category associated with each of the plurality of classical cryptographic schemes corresponding to each of the plurality of application statements using pattern matching; and

obtaining the plurality of PQC schemes, an associated security level and an associated risk value pertaining to each identified category based on a plurality of enterprise security requirements, wherein the plurality of enterprise security requirements comprise a mean arrival of attacks per unit time, a required security level of the code statement, a security level provided by the plurality of PQC schemes, a mandatory security threshold and an execution time of the code statement.

5. The method as claimed in claim 1, wherein the steps for computing the PQC conversion limit for each of the plurality of applications based on the plurality of enterprise objectives using a proportional matching based limit setter comprises:

receiving a dataset comprising a plurality of historical applications, wherein each of the plurality historical applications comprises the plurality of classical cryptographic schemes, an associated plurality of historical enterprise objectives and a statement size associated with each of a plurality of historical application statements;

clustering the plurality of classical cryptographic schemes associated with the plurality historical applications based on a plurality of cryptographic algorithmic categories;

extracting a plurality of relationship information for each of a plurality of category clusters, wherein the relationship information is extracted between the plurality of historical enterprise objectives and the associated statement size; and

computing the PQC conversion limit for each of the plurality of applications by dividing each of the plurality of relationship information by a sum of the plurality of relationship information associated with the corresponding application.

6. A system (100) comprising:

at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive an application pipeline for Post Quantum Cryptography (PQC) conversion, wherein each of a plurality of applications associated with the application pipeline for PQC conversion comprises a plurality of application statements;

identify a plurality of classical cryptographic schemes associated with each of the plurality of applications by analyzing an associated plurality of application statements and an associated plurality of enterprise objectives using an analyzer;

identify a plurality of potential classical cryptographic schemes for PQC conversion by mapping the plurality of classical cryptographic schemes associated with each of the plurality of application statements with a plurality of PQC schemes based on a plurality of application constraints, wherein the plurality of application constraints comprises an algorithm category, an associated security level and a risk value and, wherein the plurality of PQC schemes having similar algorithm category are selected only if (i) the associated security level is greater than a predefined security level threshold and (ii) the risk value greater than a predefined risk threshold;

compute a PQC conversion limit for each of the plurality of applications based on the associated plurality of enterprise objectives using a proportional matching based limit setter;

identify a plurality of potential PQC schemes from among the plurality of PQC schemes based on a plurality of application related parameters only if the associated plurality of enterprise objectives is less than the computed PQC conversion limit, wherein a plurality of security levels and a plurality of risk values associated with the identified plurality of potential PQC schemes are obtained;

iteratively select a potential PQC scheme from among the plurality of potential PQC schemes based on a plurality of constraints, wherein the plurality of constraints comprises the associated plurality of enterprise objectives, the security level and the risk value;

obtain an initial allocation for each of the plurality of applications by allocating each of the plurality of classical cryptographic schemes with the selected potential PQC scheme;

iteratively obtain an optimal PQC scheme for each of the plurality of classical cryptographic schemes by (i) varying the security level associated with each of the plurality of potential PQC schemes until the predefined security level threshold and (ii) by reducing enterprise objective values until the predefined objective threshold;

update the initial allocation for each of the plurality of applications with plurality of optimal PQC schemes; and

provide recommendation, as an alternative to each of the plurality of classical cryptographic schemes based on the plurality of optimal PQC schemes using a recommendation system.

7. The system of claim 6, wherein the plurality of enterprise objectives comprises an execution time, an associated memory space occupied, a computation cost and a communication cost.

8. The system of claim 6, wherein the application related parameters comprises a statement size associated with each of the plurality of application statements and the plurality of classical cryptographic schemes.

9. The system of claim 6, wherein the steps for mapping the plurality of classical cryptographic schemes associated with each of the plurality of application statements with the plurality of PQC schemes based on the algorithm category using a category mapper comprises:

receiving the plurality of application statements associated with each of the plurality of applications;

identifying a category associated with each of the plurality of classical cryptographic schemes corresponding to each of the plurality of application statements using pattern matching; and

obtaining the plurality of PQC schemes, an associated security level and an associated risk value pertaining to each identified category based on a plurality of enterprise security requirements, wherein the plurality of enterprise security requirements comprise a mean arrival of attacks per unit time, a required security level of the code statement, a security level provided by the plurality of PQC schemes, a mandatory security threshold and an execution time of the code statement.

10. The system of claim 6, wherein the steps for computing the PQC conversion limit for each of the plurality of applications based on the plurality of enterprise objectives using a proportional matching based limit setter comprises:

receiving a dataset comprising a plurality of historical applications, wherein each of the plurality historical applications comprises the plurality of classical cryptographic schemes, an associated plurality of historical enterprise objectives and a statement size associated with each of a plurality of historical application statements;

clustering the plurality of classical cryptographic schemes associated with the plurality historical applications based on a plurality of cryptographic algorithmic categories;

extracting a plurality of relationship information for each of a plurality of category clusters, wherein the relationship information is extracted between the plurality of historical enterprise objectives and the associated statement size; and

computing the PQC conversion limit for each of the plurality of applications by dividing each of the plurality of relationship information by a sum of the plurality of relationship information associated with the corresponding application.

11. One or more non-transitory machine-readable information storage mediums comprising one or more instructions which when executed by one or more hardware processors cause:

receiving, an application pipeline for Post Quantum Cryptography (PQC) conversion, wherein each of a plurality of applications associated with the application pipeline for PQC conversion comprises a plurality of application statements;

identifying, a plurality of classical cryptographic schemes associated with each of the plurality of applications by analyzing an associated plurality of application statements and an associated plurality of enterprise objectives using an analyzer;

identifying a plurality of potential classical cryptographic schemes for PQC conversion by mapping the plurality of classical cryptographic schemes associated with each of the plurality of application statements with a plurality of PQC schemes based on a plurality of application constraints, wherein the plurality of application constraints comprises an algorithm category, an associated security level and a risk value and, wherein the plurality of PQC schemes having similar algorithm category are selected only if (i) the associated security level is greater than a predefined security level threshold and (ii) the risk value greater than a predefined risk threshold;

computing, a PQC conversion limit for each of the plurality of applications based on the associated plurality of enterprise objectives using a proportional matching based limit setter;

identifying, a plurality of potential PQC schemes from among the plurality of PQC schemes based on a plurality of application related parameters only if the associated plurality of enterprise objectives is less than the computed PQC conversion limit, wherein a plurality of security levels and a plurality of risk values associated with the identified plurality of potential PQC schemes are obtained;

iteratively selecting, a potential PQC scheme from among the plurality of potential PQC schemes based on a plurality of constraints, wherein the plurality of constraints comprises the associated plurality of enterprise objectives, the security level and the risk value;

obtaining, an initial allocation for each of the plurality of applications by allocating each of the plurality of classical cryptographic schemes with the selected potential PQC scheme;

iteratively, an optimal PQC scheme for each of the plurality of classical cryptographic schemes by (i) varying the security level associated with each of the plurality of potential PQC schemes until the predefined security level threshold and (ii) by reducing enterprise objective values until the predefined objective threshold;

updating, the initial allocation for each of the plurality of applications with plurality of optimal PQC schemes; and

providing recommendation, as an alternative to each of the plurality of classical cryptographic schemes based on the plurality of optimal PQC schemes using a recommendation system.

12. The one or more non-transitory machine-readable information storage mediums as claimed in claim 11, wherein the plurality of enterprise objectives comprises an execution time, an associated memory space occupied, a computation cost and a communication cost.

13. The one or more non-transitory machine-readable information storage mediums as claimed in claim 11, wherein the application related parameters comprises a statement size associated with each of the plurality of application statements and the plurality of classical cryptographic schemes.

14. The one or more non-transitory machine-readable information storage mediums as claimed in claim 11, wherein the steps for mapping the plurality of classical cryptographic schemes associated with each of the plurality of application statements with the plurality of PQC schemes based on the algorithm category using a category mapper comprises: receiving the plurality of application statements associated with each of the plurality of applications;

identifying a category associated with each of the plurality of classical cryptographic schemes corresponding to each of the plurality of application statements using pattern matching; and

obtaining the plurality of PQC schemes, an associated security level and an associated risk value pertaining to each identified category based on a plurality of enterprise security requirements, wherein the plurality of enterprise security requirements comprise a mean arrival of attacks per unit time, a required security level of the code statement, a security level provided by the plurality of PQC schemes, a mandatory security threshold and an execution time of the code statement.

15. The one or more non-transitory machine-readable information storage mediums of claim 11, wherein the steps for computing the PQC conversion limit for each of the plurality of applications based on the plurality of enterprise objectives using a proportional matching based limit setter comprises:

receiving a dataset comprising a plurality of historical applications, wherein each of the plurality historical applications comprises the plurality of classical cryptographic schemes, an associated plurality of historical enterprise objectives and a statement size associated with each of a plurality of historical application statements;

clustering the plurality of classical cryptographic schemes associated with the plurality historical applications based on a plurality of cryptographic algorithmic categories;

extracting a plurality of relationship information for each of a plurality of category clusters, wherein the relationship information is extracted between the plurality of historical enterprise objectives and the associated statement size; and

computing the PQC conversion limit for each of the plurality of applications by dividing each of the plurality of relationship information by a sum of the plurality of relationship information associated with the corresponding application.

**Patentansprüche**

1. Prozessorimplementiertes Verfahren (200), wobei das Verfahren umfasst:

Empfangen (202), über einen oder mehrere Hardwareprozessoren, einer Anwendungspipeline zur Post-Quanten-Kryptografie-(PQC)-Umwandlung, wobei jede einer Mehrzahl von Anwendungen, die der Anwendungspipeline zur PQC-Umwandlung zugeordnet sind, eine Mehrzahl von Anwendungsanweisungen umfasst;

Identifizieren (204), über den einen oder die mehreren Hardwareprozessoren, einer Mehrzahl von klassischen kryptographischen Schemata, die jeder der Mehrzahl von Anwendungen zugeordnet sind, durch Analysieren einer zugeordneten Mehrzahl von Anwendungsanweisungen und einer zugeordneten Mehrzahl von Unternehmenszielen unter Verwendung eines Analysators;

Identifizieren (206), über den einen oder die mehreren Hardwareprozessoren, einer Mehrzahl von potenziellen klassischen kryptographischen Schemata zur PQC-Umwandlung durch Abbilden der Mehrzahl von klassischen kryptographischen Schemata, die jeder der Mehrzahl von Anwendungsanweisungen zugeordnet sind, auf eine Mehrzahl von PQC-Schemata basierend auf einer Mehrzahl von Anwendungsbeschränkungen, wobei die Mehrzahl von Anwendungsbeschränkungen eine Algorithmuskategorie, ein zugeordnetes Sicherheitsniveau und einen Risikowert umfasst, und wobei die Mehrzahl von PQC-Schemata mit einer ähnlichen Algorithmuskategorie nur ausgewählt wird, wenn (i) das zugeordnete Sicherheitsniveau größer als ein vordefinierter Sicherheitsniveauschwellenwert ist und (ii) der Risikowert größer als ein vordefinierter Risikoschwellenwert ist;

Berechnen (208), über den einen oder die mehreren Hardwareprozessoren, einer PQC-Umwandlungsgrenze für jede der Mehrzahl von Anwendungen basierend auf der zugeordneten Mehrzahl von Unternehmenszielen unter Verwendung eines auf proportionaler Anpassung basierenden Grenzensetzers;

Identifizieren (210), über den einen oder die mehreren Hardwareprozessoren, einer Mehrzahl von potenziellen PQC-Schemata aus der Mehrzahl von PQC-Schemata basierend auf einer Mehrzahl von anwendungsbezogenen Parametern nur, wenn die zugeordnete Mehrzahl von Unternehmenszielen kleiner als die berechnete PQC-Umwandlungsgrenze ist, wobei eine Mehrzahl von Sicherheitsniveaus und eine Mehrzahl von Risikowerten, die der identifizierten Mehrzahl von potenziellen PQC-Schemata zugeordnet sind, erhalten werden;

iteratives Auswählen (212), über den einen oder die mehreren Hardwareprozessoren, eines potenziellen PQC-Schemas aus der Mehrzahl von potenziellen PQC-Schemata basierend auf einer Mehrzahl von Beschränkungen, wobei die Mehrzahl von Beschränkungen die zugeordnete Mehrzahl von Unternehmenszielen, das Sicherheitsniveau und den Risikowert umfasst;

Erhalten (214), über den einen oder die mehreren Hardwareprozessoren, einer anfänglichen Zuordnung für jede der Mehrzahl von Anwendungen durch Zuordnen jedes der Mehrzahl von klassischen kryptographischen Schemata zu dem ausgewählten potenziellen PQC-Schema;

iteratives Erhalten (216), über den einen oder die mehreren Hardwareprozessoren, eines optimalen PQC-Schemas für jedes der Mehrzahl von klassischen kryptographischen Schemata durch (i) Variieren des Sicherheitsniveaus, das jedem der Mehrzahl von potenziellen PQC-Schemata zugeordnet ist, bis zu dem vordefinierten Sicherheitsniveauschwellenwert und (ii) durch Reduzieren von Unternehmenszielwerten bis zu dem vordefinierten Zielschwellenwert;

Aktualisieren (218), über den einen oder die mehreren Hardwareprozessoren, der anfänglichen Zuordnung für jede der Mehrzahl von Anwendungen mit einer Mehrzahl von optimalen PQC-Schemata; und

Bereitstellen einer Empfehlung (220), über den einen oder die mehreren Hardwareprozessoren, als eine Alternative zu jedem der Mehrzahl von klassischen kryptographischen Schemata basierend auf der Mehrzahl von optimalen PQC-Schemata unter Verwendung eines Empfehlungssystems.

2. Verfahren nach Anspruch 1, wobei die Mehrzahl von Unternehmenszielen eine Ausführungszeit, einen zugeordneten belegten Speicherplatz, Berechnungskosten und Kommunikationskosten umfasst.

3. Verfahren nach Anspruch 1, wobei die anwendungsbezogenen Parameter eine Aussagegröße umfassen, die jeder der Mehrzahl von Anwendungsaussagen und der Mehrzahl von klassischen kryptographischen Schemata zugeordnet ist.

4. Verfahren nach Anspruch 1, wobei die Schritte zum Abbilden der Mehrzahl von klassischen kryptographischen Schemata, die jeder der Mehrzahl von Anwendungsaussagen zugeordnet sind, auf die Mehrzahl von PQC-Schemata basierend auf der Algorithmuskategorie unter Verwendung eines Kategoriemappers Folgendes umfasst:

Empfangen der Mehrzahl von Anwendungsaussagen, die jeder der Mehrzahl von Anwendungen zugeordnet sind;
Identifizieren einer Kategorie, die jedem der Mehrzahl von klassischen kryptographischen Schemata zugeordnet ist, die jeder der Mehrzahl von Anwendungsaussagen entsprechen, unter Verwendung von Musterabgleich; und
Erhalten der Mehrzahl von PQC-Schemata, eines zugeordneten Sicherheitsniveaus und eines zugeordneten Risikowerts, die sich auf jede identifizierte Kategorie beziehen, basierend auf einer Mehrzahl von Unternehmenssicherheitsanforderungen, wobei die Mehrzahl von Unternehmenssicherheitsanforderungen eine mittlere Ankunft von Angriffen pro Zeiteinheit, ein erforderliches Sicherheitsniveau der Codeaussage, ein Sicherheitsniveau, das durch die Mehrzahl von PQC-Schemata bereitgestellt wird, einen obligatorischen Sicherheitsschwellenwert und eine Ausführungszeit der Codeaussage umfassen.

5. Verfahren nach Anspruch 1, wobei die Schritte zum Berechnen der PQC-Umwandlungsgrenze für jede der Mehrzahl von Anwendungen basierend auf der Mehrzahl von Unternehmenszielen unter Verwendung eines auf proportionaler Anpassung basierenden Grenzensetzers Folgendes umfassen:

Empfangen eines Datensatzes, der eine Mehrzahl von historischen Anwendungen umfasst, wobei jede der Mehrzahl von historischen Anwendungen die Mehrzahl von klassischen kryptographischen Schemata, eine zugeordnete Mehrzahl von historischen Unternehmenszielen und eine Aussagegröße, die jeder einer Mehrzahl von historischen Anwendungsaussagen zugeordnet ist, umfasst;
Clustern der Mehrzahl von klassischen kryptographischen Schemata, die der Mehrzahl von historischen Anwendungen zugeordnet sind, basierend auf einer Mehrzahl von kryptographischen algorithmischen Kategorien;
Extrahieren einer Mehrzahl von Beziehungsinformationen für jeden einer Mehrzahl von Kategorieclustern, wobei die Beziehungsinformationen zwischen der Mehrzahl von historischen Unternehmenszielen und der zugeordneten Aussagegröße extrahiert werden; und
Berechnen der PQC-Umwandlungsgrenze für jede der Mehrzahl von Anwendungen durch Dividieren jeder der Mehrzahl von Beziehungsinformationen durch eine Summe der Mehrzahl von Beziehungsinformationen, die der entsprechenden Anwendung zugeordnet sind.

6. System (100), umfassend:
mindestens einen Speicher (104), der programmierte Anweisungen speichert; eine oder mehrere Eingabe/Ausgabe(E/A)-Schnittstellen (112); und einen oder mehrere Hardwareprozessoren (102), die betriebsfähig mit dem mindestens einen Speicher (104) gekoppelt sind, wobei der eine oder die mehreren Hardwareprozessoren (102) durch die programmierten Anweisungen konfiguriert sind zum:

Empfangen einer Anwendungspipeline zur Post-Quanten-Kryptografie-(PQC)-Umwandlung, wobei jede einer Mehrzahl von Anwendungen, die der Anwendungspipeline zur PQC-Umwandlung zugeordnet sind, eine Mehrzahl von Anwendungsaussagen umfasst;
Identifizieren einer Mehrzahl von klassischen kryptographischen Schemata, die jeder der Mehrzahl von Anwendungen zugeordnet sind, durch Analysieren einer zugeordneten Mehrzahl von Anwendungsaussagen und einer zugeordneten Mehrzahl von Unternehmenszielen unter Verwendung eines Analysators;
Identifizieren einer Mehrzahl von potenziellen klassischen kryptographischen Schemata zur PQC-Umwandlung durch Abbilden der Mehrzahl von klassischen kryptographischen Schemata, die jeder der Mehrzahl von Anwendungsaussagen zugeordnet sind, auf eine Mehrzahl von PQC-Schemata basierend auf einer Mehrzahl von Anwendungsbeschränkungen, wobei die Mehrzahl von Anwendungsbeschränkungen eine Algorithmuskategorie, ein zugeordnetes Sicherheitsniveau und einen Risikowert umfasst, und wobei die Mehrzahl von PQC-Schemata mit einer ähnlichen Algorithmuskategorie nur ausgewählt wird, wenn (i) das zugeordnete Sicherheitsniveau größer als ein vordefinierter Sicherheitsniveauschwellenwert ist und (ii) der Risikowert größer als ein vordefinierter Risikoschwellenwert ist;
Berechnen einer PQC-Umwandlungsgrenze für jede der Mehrzahl von Anwendungen basierend auf der zugeordneten Mehrzahl von Unternehmenszielen unter Verwendung eines auf proportionaler Anpassung basierenden Grenzensetzers;

Identifizieren einer Mehrzahl von potenziellen PQC-Schemata aus der Mehrzahl von PQC-Schemata basierend auf einer Mehrzahl von anwendungsbezogenen Parametern nur, wenn die zugeordnete Mehrzahl von Unternehmenszielen kleiner als die berechnete PQC-Umwandlungsgrenze ist, wobei eine Mehrzahl von Sicherheitsniveaus und eine Mehrzahl von Risikowerten, die der identifizierten Mehrzahl von potenziellen PQC-Schemata zugeordnet sind, erhalten werden;

iteratives Auswählen eines potenziellen PQC-Schemas aus der Mehrzahl von potenziellen PQC-Schemata basierend auf einer Mehrzahl von Beschränkungen, wobei die Mehrzahl von Beschränkungen die zugeordnete Mehrzahl von Unternehmenszielen, das Sicherheitsniveau und den Risikowert umfasst;

Erhalten einer anfänglichen Zuordnung für jede der Mehrzahl von Anwendungen durch Zuordnen jedes der Mehrzahl von klassischen kryptographischen Schemata zu dem ausgewählten potenziellen PQC-Schema;

iteratives Erhalten eines optimalen PQC-Schemas für jedes der Mehrzahl von klassischen kryptographischen Schemata durch (i) Variieren des Sicherheitsniveaus, das jedem der Mehrzahl von potenziellen PQC-Schemata zugeordnet ist, bis zu dem vordefinierten Sicherheitsniveauschwellenwert und (ii) durch Reduzieren von Unternehmenszielwerten bis zu dem vordefinierten Zielschwellenwert;

Aktualisieren der anfänglichen Zuordnung für jede der Mehrzahl von Anwendungen mit einer Mehrzahl von optimalen PQC-Schemata; und

Bereitstellen einer Empfehlung als eine Alternative zu jedem der Mehrzahl von klassischen kryptographischen Schemata basierend auf der Mehrzahl von optimalen PQC-Schemata unter Verwendung eines Empfehlungssystems.

7. System nach Anspruch 6, wobei die Mehrzahl von Unternehmenszielen eine Ausführungszeit, einen zugeordneten belegten Speicherplatz, Berechnungskosten und Kommunikationskosten umfasst.

8. System nach Anspruch 6, wobei die anwendungsbezogenen Parameter eine Aussagegröße umfassen, die jeder der Mehrzahl von Anwendungsaussagen und der Mehrzahl von klassischen kryptographischen Schemata zugeordnet ist.

9. System nach Anspruch 6, wobei die Schritte zum Abbilden der Mehrzahl von klassischen kryptographischen Schemata, die jeder der Mehrzahl von Anwendungsaussagen zugeordnet sind, auf die Mehrzahl von PQC-Schemata basierend auf der Algorithmuskategorie unter Verwendung eines Kategoriemappers Folgendes umfassen:

Empfangen der Mehrzahl von Anwendungsaussagen, die jeder der Mehrzahl von Anwendungen zugeordnet sind;

Identifizieren einer Kategorie, die jedem der Mehrzahl von klassischen kryptographischen Schemata zugeordnet ist, die jeder der Mehrzahl von Anwendungsaussagen entsprechen, unter Verwendung von Musterabgleich; und

Erhalten der Mehrzahl von PQC-Schemata, eines zugeordneten Sicherheitsniveaus und eines zugeordneten Risikowerts, die sich auf jede identifizierte Kategorie beziehen, basierend auf einer Mehrzahl von Unternehmenssicherheitsanforderungen, wobei die Mehrzahl von Unternehmenssicherheitsanforderungen eine mittlere Ankunft von Angriffen pro Zeiteinheit, ein erforderliches Sicherheitsniveau der Codeaussage, ein Sicherheitsniveau, das durch die Mehrzahl von PQC-Schemata bereitgestellt wird, einen obligatorischen Sicherheitsschwellenwert und eine Ausführungszeit der Codeaussage umfassen.

10. System nach Anspruch 6, wobei die Schritte zum Berechnen der PQC-Umwandlungsgrenze für jede der Mehrzahl von Anwendungen basierend auf der Mehrzahl von Unternehmenszielen unter Verwendung eines auf proportionaler Anpassung basierenden Grenzensetzers Folgendes umfassen:

Empfangen eines Datensatzes, der eine Mehrzahl von historischen Anwendungen umfasst, wobei jede der Mehrzahl von historischen Anwendungen die Mehrzahl von klassischen kryptographischen Schemata, eine zugeordnete Mehrzahl von historischen Unternehmenszielen und eine Aussagegröße, die jeder einer Mehrzahl von historischen Anwendungsaussagen zugeordnet ist, umfasst;

Clustern der Mehrzahl von klassischen kryptographischen Schemata, die der Mehrzahl von historischen Anwendungen zugeordnet sind, basierend auf einer Mehrzahl von kryptographischen algorithmischen Kategorien;

Extrahieren einer Mehrzahl von Beziehungsinformationen für jeden einer Mehrzahl von Kategorieclustern, wobei die Beziehungsinformationen zwischen der Mehrzahl von historischen Unternehmenszielen und der zugeordneten Aussagegröße extrahiert werden; und

Berechnen der PQC-Umwandlungsgrenze für jede der Mehrzahl von Anwendungen durch Dividieren jeder der Mehrzahl von Beziehungsinformationen durch eine Summe der Mehrzahl von Beziehungsinformationen, die der entsprechenden Anwendung zugeordnet sind.

11. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes bewirken:

Empfangen einer Anwendungspipeline zur Post-Quanten-Kryptografie-(PQC)-Umwandlung, wobei jede einer Mehrzahl von Anwendungen, die der Anwendungspipeline zur PQC-Umwandlung zugeordnet sind, eine Mehrzahl von Anwendungsaussagen umfasst;
Identifizieren einer Mehrzahl von klassischen kryptographischen Schemata, die jeder der Mehrzahl von Anwendungen zugeordnet sind, durch Analysieren einer zugeordneten Mehrzahl von Anwendungsaussagen und einer zugeordneten Mehrzahl von Unternehmenszielen unter Verwendung eines Analysators;
Identifizieren einer Mehrzahl von potenziellen klassischen kryptographischen Schemata zur PQC-Umwandlung durch Abbilden der Mehrzahl von klassischen kryptographischen Schemata, die jeder der Mehrzahl von Anwendungsaussagen zugeordnet sind, auf eine Mehrzahl von PQC-Schemata basierend auf einer Mehrzahl von Anwendungsbeschränkungen, wobei die Mehrzahl von Anwendungsbeschränkungen eine Algorithmuskategorie, ein zugeordnetes Sicherheitsniveau und einen Risikowert umfasst, und wobei die Mehrzahl von PQC-Schemata mit einer ähnlichen Algorithmuskategorie nur ausgewählt wird, wenn (i) das zugeordnete Sicherheitsniveau größer als ein vordefinierter Sicherheitsniveauschwellenwert ist und (ii) der Risikowert größer als ein vordefinierter Risikoschwellenwert ist;
Berechnen einer PQC-Umwandlungsgrenze für jede der Mehrzahl von Anwendungen basierend auf der zugeordneten Mehrzahl von Unternehmenszielen unter Verwendung eines auf proportionaler Anpassung basierenden Grenzensetzers;
Identifizieren einer Mehrzahl von potenziellen PQC-Schemata aus der Mehrzahl von PQC-Schemata basierend auf einer Mehrzahl von anwendungsbezogenen Parametern nur, wenn die zugeordnete Mehrzahl von Unternehmenszielen kleiner als die berechnete PQC-Umwandlungsgrenze ist, wobei eine Mehrzahl von Sicherheitsniveaus und eine Mehrzahl von Risikowerten, die der identifizierten Mehrzahl von potenziellen PQC-Schemata zugeordnet sind, erhalten werden;
iteratives Auswählen eines potenziellen PQC-Schemas aus der Mehrzahl von potenziellen PQC-Schemata basierend auf einer Mehrzahl von Beschränkungen, wobei die Mehrzahl von Beschränkungen die zugeordnete Mehrzahl von Unternehmenszielen, das Sicherheitsniveau und den Risikowert umfasst;
Erhalten einer anfänglichen Zuordnung für jede der Mehrzahl von Anwendungen durch Zuordnen jedes der Mehrzahl von klassischen kryptographischen Schemata zu dem ausgewählten potenziellen PQC-Schema;
iteratives Berechnen eines optimalen PQC-Schemas für jedes der Mehrzahl von klassischen kryptographischen Schemata durch (i) Variieren des Sicherheitsniveaus, das jedem der Mehrzahl von potenziellen PQC-Schemata zugeordnet ist, bis zu dem vordefinierten Sicherheitsniveauschwellenwert und (ii) durch Reduzieren von Unternehmenszielwerten bis zu dem vordefinierten Zielschwellenwert;
Aktualisieren der anfänglichen Zuordnung für jede der Mehrzahl von Anwendungen mit einer Mehrzahl von optimalen PQC-Schemata; und
Bereitstellen einer Empfehlung als eine Alternative zu jedem der Mehrzahl von klassischen kryptographischen Schemata basierend auf der Mehrzahl von optimalen PQC-Schemata unter Verwendung eines Empfehlungssystems.

12. Ein oder mehrere nichtflüchtige maschinenlesbare Informationsspeichermedien nach Anspruch 11, wobei die Mehrzahl von Unternehmenszielen eine Ausführungszeit, einen zugeordneten belegten Speicherplatz, Berechnungskosten und Kommunikationskosten umfasst.

13. Ein oder mehrere nichtflüchtige maschinenlesbare Informationsspeichermedien nach Anspruch 11, wobei die anwendungsbezogenen Parameter eine Aussagegröße umfassen, die jeder der Mehrzahl von Anwendungsaussagen und der Mehrzahl von klassischen kryptographischen Schemata zugeordnet ist.

14. Ein oder mehrere nichtflüchtige maschinenlesbare Informationsspeichermedien nach Anspruch 11, wobei die Schritte zum Abbilden der Mehrzahl von klassischen kryptographischen Schemata, die jeder der Mehrzahl von Anwendungsaussagen zugeordnet sind, auf die Mehrzahl von PQC-Schemata basierend auf der Algorithmuskategorie unter Verwendung eines Kategoriemappers Folgendes umfassen:
Empfangen der Mehrzahl von Anwendungsaussagen, die jeder der Mehrzahl von Anwendungen zugeordnet sind;

Identifizieren einer Kategorie, die jedem der Mehrzahl von klassischen kryptographischen Schemata zugeordnet ist, die jeder der Mehrzahl von Anwendungsaussagen entsprechen, unter Verwendung von Musterabgleich; und Erhalten der Mehrzahl von PQC-Schemata, eines zugeordneten Sicherheitsniveaus und eines zugeordneten Risikowerts, die sich auf jede identifizierte Kategorie beziehen, basierend auf einer Mehrzahl von Unternehmenssicherheitsanforderungen, wobei die Mehrzahl von Unternehmenssicherheitsanforderungen eine mittlere Ankunft von Angriffen pro Zeiteinheit, ein erforderliches Sicherheitsniveau der Codeaussage, ein Sicherheitsniveau, das durch die Mehrzahl von PQC-Schemata bereitgestellt wird, einen obligatorischen Sicherheitsschwellenwert und eine Ausführungszeit der Codeaussage umfassen.

15. Ein oder mehrere nichtflüchtige maschinenlesbare Informationsspeichermedien nach Anspruch 11, wobei die Schritte zum Berechnen der PQC-Umwandlungsgrenze für jede der Mehrzahl von Anwendungen basierend auf der Mehrzahl von Unternehmenszielen unter Verwendung eines auf proportionaler Anpassung basierenden Grenzensetzers Folgendes umfassen:

Empfangen eines Datensatzes, der eine Mehrzahl von historischen Anwendungen umfasst, wobei jede der Mehrzahl von historischen Anwendungen die Mehrzahl von klassischen kryptographischen Schemata, eine zugeordnete Mehrzahl von historischen Unternehmenszielen und eine Aussagegröße, die jeder einer Mehrzahl von historischen Anwendungsaussagen zugeordnet ist, umfasst;

Clustern der Mehrzahl von klassischen kryptographischen Schemata, die der Mehrzahl von historischen Anwendungen zugeordnet sind, basierend auf einer Mehrzahl von kryptographischen algorithmischen Kategorien;
Extrahieren einer Mehrzahl von Beziehungsinformationen für jeden einer Mehrzahl von Kategorieclustern, wobei die Beziehungsinformationen zwischen der Mehrzahl von historischen Unternehmenszielen und der zugeordneten Aussagegröße extrahiert werden; und

Berechnen der PQC-Umwandlungsgrenze für jede der Mehrzahl von Anwendungen durch Dividieren jeder der Mehrzahl von Beziehungsinformationen durch eine Summe der Mehrzahl von Beziehungsinformationen, die der entsprechenden Anwendung zugeordnet sind.

## Revendications

1. Procédé mis en œuvre par processeur (200), le procédé comprenant :

la réception (202), via un ou plusieurs processeurs matériels, d'un pipeline d'applications pour une conversion de cryptographie post-quantique (PQC), dans lequel chacune d'une pluralité d'applications associées au pipeline d'applications pour une conversion PQC comprend une pluralité d'instructions d'application ;
l'identification (204), via les un ou plusieurs processeurs matériels, d'une pluralité de schémas cryptographiques classiques associés à chacune de la pluralité d'applications en analysant une pluralité associée d'instructions d'application et une pluralité associée d'objectifs d'entreprise en utilisant un analyseur ;
l'identification (206), via les un ou plusieurs processeurs matériels, d'une pluralité de schémas cryptographiques classiques potentiels pour une conversion PQC en mettant en correspondance la pluralité de schémas cryptographiques classiques associés à chacun de la pluralité d'instructions d'application avec une pluralité de schémas PQC sur la base d'une pluralité de contraintes d'applications, dans lequel la pluralité de contraintes d'applications comprend une catégorie d'algorithme, un niveau de sécurité associé et une valeur de risque et, dans lequel la pluralité de schémas PQC ayant une catégorie d'algorithme similaire sont sélectionnés uniquement si (i) le niveau de sécurité associé est supérieur à un seuil de niveau de sécurité prédéfini et (ii) la valeur de risque est supérieure à un seuil de risque prédéfini ;
le calcul (208), via les un ou plusieurs processeurs matériels, d'une limite de conversion PQC pour chacune de la pluralité d'applications sur la base de la pluralité associée d'objectifs d'entreprise en utilisant un dispositif de réglage de limite basé sur une correspondance proportionnelle ;
l'identification (210), via les un ou plusieurs processeurs matériels, d'une pluralité de schémas PQC potentiels parmi la pluralité de schémas PQC sur la base d'une pluralité de paramètres liés à une application uniquement si la pluralité associée d'objectifs d'entreprise est inférieure à la limite de conversion PQC calculée, dans lequel une pluralité de niveaux de sécurité et une pluralité de valeurs de risque associées à la pluralité identifiée de schémas PQC potentiels sont obtenues ;
la sélection itérative (212), via les un ou plusieurs processeurs matériels, d'un schéma PQC potentiel parmi la pluralité de schémas PQC potentiels sur la base d'une pluralité de contraintes, dans lequel la pluralité de contraintes comprend la pluralité associée d'objectifs d'entreprise, le niveau de sécurité et la valeur de risque ;

l'obtention (214), via les un ou plusieurs processeurs matériels, d'une allocation initiale pour chacune de la pluralité d'applications en allouant chacun de la pluralité de schémas cryptographiques classiques au schéma PQC potentiel sélectionné ;

l'obtention itérative (216), via les un ou plusieurs processeurs matériels, d'un schéma PQC optimal pour chacun de la pluralité de schémas cryptographiques classiques en (i) faisant varier le niveau de sécurité associé à chacun de la pluralité de schémas PQC potentiels jusqu'au seuil de niveau de sécurité prédéfini et (ii) en réduisant des valeurs d'objectifs d'entreprise jusqu'au seuil d'objectif prédéfini ;

la mise à jour (218), via les un ou plusieurs processeurs matériels, de l'allocation initiale pour chacune de la pluralité d'applications avec une pluralité de schémas PQC optimaux ; et

la fourniture d'une recommandation (220), via les un ou plusieurs processeurs matériels, en tant qu'alternative à chacun de la pluralité de schémas cryptographiques classiques sur la base de la pluralité de schémas PQC optimaux en utilisant un système de recommandation.

2. Procédé selon la revendication 1, dans lequel la pluralité d'objectifs d'entreprise comprend un temps d'exécution, un espace mémoire associé occupé, un coût de calcul et un coût de communication.

3. Procédé selon la revendication 1, dans lequel les paramètres liés à une application comprennent une taille d'instruction associée à chacune de la pluralité d'instructions d'application et à la pluralité de schémas cryptographiques classiques.

4. Procédé selon la revendication 1, dans lequel les étapes de mappage de la pluralité de schémas cryptographiques classiques associés à chacune de la pluralité d'instructions d'application avec la pluralité de schémas PQC sur la base de la catégorie d'algorithme en utilisant un mappeur de catégorie comprennent :

la réception de la pluralité d'instructions d'application associées à chacune de la pluralité d'applications ;

l'identification d'une catégorie associée à chacun de la pluralité de schémas cryptographiques classiques correspondant à chacune de la pluralité d'instructions d'application en utilisant une correspondance de modèle ; et

l'obtention de la pluralité de schémas PQC, d'un niveau de sécurité associé et d'une valeur de risque associée se rapportant à chaque catégorie identifiée sur la base d'une pluralité d'exigences de sécurité d'entreprise, dans lequel la pluralité d'exigences de sécurité d'entreprise comprennent une arrivée moyenne d'attaques par unité de temps, un niveau de sécurité requis de l'instruction de code, un niveau de sécurité fourni par la pluralité de schémas PQC, un seuil de sécurité obligatoire et un temps d'exécution de l'instruction de code.

5. Procédé selon la revendication 1, dans lequel les étapes de calcul de la limite de conversion PQC pour chacune de la pluralité d'applications sur la base de la pluralité d'objectifs d'entreprise en utilisant un dispositif de réglage de limite basé sur une correspondance proportionnelle comprennent :

la réception d'un ensemble de données comprenant une pluralité d'applications historiques, dans lequel chacune de la pluralité d'applications historiques comprend la pluralité de schémas cryptographiques classiques, une pluralité associée d'objectifs d'entreprise historiques et une taille d'instruction associée à chacune d'une pluralité d'instructions d'application historiques ;

le regroupement de la pluralité de schémas cryptographiques classiques associés à la pluralité d'applications historiques sur la base d'une pluralité de catégories d'algorithmes cryptographiques ;

l'extraction d'une pluralité d'informations de relation pour chacun d'une pluralité de regroupements de catégories, dans lequel les informations de relation sont extraites entre la pluralité d'objectifs d'entreprise historiques et la taille d'instruction associée ; et

le calcul de la limite de conversion PQC pour chacune de la pluralité d'applications en divisant chacune de la pluralité d'informations de relation par une somme de la pluralité d'informations de relation associées à l'application correspondante.

6. Système (100) comprenant :

au moins une mémoire (104) stockant des instructions programmées ; une ou plusieurs interfaces d'entrée/sortie (E/S) (112) ; et un ou plusieurs processeurs matériels (102) couplés de manière opérationnelle à l'au moins une mémoire (104), dans lequel les un ou plusieurs processeurs matériels (102) sont configurés par les instructions programmées pour :

recevoir un pipeline d'applications pour une conversion de cryptographie post-quantique (PQC), dans lequel chacune d'une pluralité d'applications associées au pipeline d'applications pour une conversion PQC comprend une pluralité d'instructions d'application ;

identifier une pluralité de schémas cryptographiques classiques associés à chacune de la pluralité d'applications en analysant une pluralité associée d'instructions d'application et une pluralité associée d'objectifs d'entreprise en utilisant un analyseur ;

identifier une pluralité de schémas cryptographiques classiques potentiels pour une conversion PQC en mettant en correspondance la pluralité de schémas cryptographiques classiques associés à chacun de la pluralité d'instructions d'application avec une pluralité de schémas PQC sur la base d'une pluralité de contraintes d'applications, dans lequel la pluralité de contraintes d'applications comprend une catégorie d'algorithme, un niveau de sécurité associé et une valeur de risque et, dans lequel la pluralité de schémas PQC ayant une catégorie d'algorithme similaire sont sélectionnés uniquement si (i) le niveau de sécurité associé est supérieur à un seuil de niveau de sécurité prédéfini et (ii) la valeur de risque est supérieure à un seuil de risque prédéfini ;

calculer une limite de conversion PQC pour chacune de la pluralité d'applications sur la base de la pluralité associée d'objectifs d'entreprise en utilisant un dispositif de réglage de limite basé sur une correspondance proportionnelle ;

identifier une pluralité de schémas PQC potentiels parmi la pluralité de schémas PQC sur la base d'une pluralité de paramètres liés à une application uniquement si la pluralité associée d'objectifs d'entreprise est inférieure à la limite de conversion PQC calculée, dans lequel une pluralité de niveaux de sécurité et une pluralité de valeurs de risque associées à la pluralité identifiée de schémas PQC potentiels sont obtenues ;

sélectionner itérativement un schéma PQC potentiel parmi la pluralité de schémas PQC potentiels sur la base d'une pluralité de contraintes, dans lequel la pluralité de contraintes comprend la pluralité associée d'objectifs d'entreprise, le niveau de sécurité et la valeur de risque ;

obtenir une allocation initiale pour chacune de la pluralité d'applications en allouant chacun de la pluralité de schémas cryptographiques classiques au schéma PQC potentiel sélectionné ;

obtenir itérativement un schéma PQC optimal pour chacun de la pluralité de schémas cryptographiques classiques en (i) faisant varier le niveau de sécurité associé à chacun de la pluralité de schémas PQC potentiels jusqu'au seuil de niveau de sécurité prédéfini et (ii) en réduisant des valeurs d'objectifs d'entreprise jusqu'au seuil d'objectif prédéfini ;

mettre à jour l'allocation initiale pour chacune de la pluralité d'applications avec une pluralité de schémas PQC optimaux ; et

fournir une recommandation, en tant qu'alternative à chacun de la pluralité de schémas cryptographiques classiques sur la base de la pluralité de schémas PQC optimaux en utilisant un système de recommandation.

7. Système selon la revendication 6, dans lequel la pluralité d'objectifs d'entreprise comprend un temps d'exécution, un espace mémoire associé occupé, un coût de calcul et un coût de communication.

8. Système selon la revendication 6, dans lequel les paramètres liés à une application comprennent une taille d'instruction associée à chacune de la pluralité d'instructions d'application et à la pluralité de schémas cryptographiques classiques.

9. Système selon la revendication 6, dans lequel les étapes de mise en correspondance de la pluralité de schémas cryptographiques classiques associés à chacune de la pluralité d'instructions d'application avec la pluralité de schémas PQC sur la base de la catégorie d'algorithme en utilisant un mappeur de catégorie comprennent :

la réception de la pluralité d'instructions d'application associées à chacune de la pluralité d'applications ;

l'identification d'une catégorie associée à chacun de la pluralité de schémas cryptographiques classiques correspondant à chacune de la pluralité d'instructions d'application en utilisant une correspondance de modèle ; et

l'obtention de la pluralité de schémas PQC, d'un niveau de sécurité associé et d'une valeur de risque associée se rapportant à chaque catégorie identifiée sur la base d'une pluralité d'exigences de sécurité d'entreprise, dans lequel la pluralité d'exigences de sécurité d'entreprise comprennent une arrivée moyenne d'attaques par unité de temps, un niveau de sécurité requis de l'instruction de code, un niveau de sécurité fourni par la pluralité de schémas PQC, un seuil de sécurité obligatoire et un temps d'exécution de l'instruction de code.

10. Système selon la revendication 6, dans lequel les étapes de calcul de la limite de conversion PQC pour chacune de la pluralité d'applications sur la base de la pluralité d'objectifs d'entreprise en utilisant un dispositif de réglage de limite basé sur une correspondance proportionnelle comprennent :

la réception d'un ensemble de données comprenant une pluralité d'applications historiques, dans lequel chacune de la pluralité d'applications historiques comprend la pluralité de schémas cryptographiques classiques, une pluralité associée d'objectifs d'entreprise historiques et une taille d'instruction associée à chacune d'une pluralité d'instructions d'application historiques ;

le regroupement de la pluralité de schémas cryptographiques classiques associés à la pluralité d'applications historiques sur la base d'une pluralité de catégories d'algorithmes cryptographiques ;

l'extraction d'une pluralité d'informations de relation pour chacun d'une pluralité de regroupements de catégories, dans lequel les informations de relation sont extraites entre la pluralité d'objectifs d'entreprise historiques et la taille d'instruction associée ; et

le calcul de la limite de conversion PQC pour chacune de la pluralité d'applications en divisant chacune de la pluralité d'informations de relation par une somme de la pluralité d'informations de relation associées à l'application correspondante.

11. Un ou plusieurs supports de stockage d'informations lisibles par machine non transitoires comprenant une ou plusieurs instructions qui, lorsqu'elles sont exécutées par un ou plusieurs processeurs matériels, amènent :

la réception d'un pipeline d'applications pour une conversion de cryptographie post-quantique (PQC), dans lequel chacune d'une pluralité d'applications associées au pipeline d'applications pour une conversion PQC comprend une pluralité d'instructions d'application ;

l'identification d'une pluralité de schémas cryptographiques classiques associés à chacune de la pluralité d'applications en analysant une pluralité associée d'instructions d'application et une pluralité associée d'objectifs d'entreprise en utilisant un analyseur ;

l'identification d'une pluralité de schémas cryptographiques classiques potentiels pour une conversion PQC en mettant en correspondance la pluralité de schémas cryptographiques classiques associés à chacun de la pluralité d'instructions d'application avec une pluralité de schémas PQC sur la base d'une pluralité de contraintes d'applications, dans lequel la pluralité de contraintes d'applications comprend une catégorie d'algorithme, un niveau de sécurité associé et une valeur de risque et, dans lequel la pluralité de schémas PQC ayant une catégorie d'algorithme similaire sont sélectionnés uniquement si (i) le niveau de sécurité associé est supérieur à un seuil de niveau de sécurité prédéfini et (ii) la valeur de risque est supérieure à un seuil de risque prédéfini ;

le calcul d'une limite de conversion PQC pour chacune de la pluralité d'applications sur la base de la pluralité associée d'objectifs d'entreprise en utilisant un dispositif de réglage de limite basé sur une correspondance proportionnelle ;

l'identification d'une pluralité de schémas PQC potentiels parmi la pluralité de schémas PQC sur la base d'une pluralité de paramètres liés à une application uniquement si la pluralité associée d'objectifs d'entreprise est inférieure à la limite de conversion PQC calculée, dans lequel une pluralité de niveaux de sécurité et une pluralité de valeurs de risque associées à la pluralité identifiée de schémas PQC potentiels sont obtenues ;

la sélection itérative d'un schéma PQC potentiel parmi la pluralité de schémas PQC potentiels sur la base d'une pluralité de contraintes, dans lequel la pluralité de contraintes comprend la pluralité associée d'objectifs d'entreprise, le niveau de sécurité et la valeur de risque ;

l'obtention d'une allocation initiale pour chacune de la pluralité d'applications en allouant chacun de la pluralité de schémas cryptographiques classiques au schéma PQC potentiel sélectionné ;

l'obtention itérative d'un schéma PQC optimal pour chacun de la pluralité de schémas cryptographiques classiques en (i) faisant varier le niveau de sécurité associé à chacun de la pluralité de schémas PQC potentiels jusqu'au seuil de niveau de sécurité prédéfini et (ii) en réduisant des valeurs d'objectifs d'entreprise jusqu'au seuil d'objectif prédéfini ;

la mise à jour de l'allocation initiale pour chacune de la pluralité d'applications avec une pluralité de schémas PQC optimaux ; et

la fourniture d'une recommandation, en tant qu'alternative à chacun de la pluralité de schémas cryptographiques classiques sur la base de la pluralité de schémas PQC optimaux en utilisant un système de recommandation.

12. Un ou plusieurs supports de stockage d'informations lisibles par machine non transitoires selon la revendication 11, dans lequel la pluralité d'objectifs d'entreprise comprend un temps d'exécution, un espace mémoire associé occupé, un coût de calcul et un coût de communication.

13. Un ou plusieurs supports de stockage d'informations lisibles par machine non transitoires selon la revendication 11, dans lequel les paramètres liés à une application comprennent une taille d'instruction associée à chacune de la pluralité d'instructions d'application et à la pluralité de schémas cryptographiques classiques.

**14.** Un ou plusieurs supports de stockage d'informations lisibles par machine non transitoires selon la revendication **11,** dans lequel les étapes de mise en correspondance de la pluralité de schémas cryptographiques classiques associés à chacune de la pluralité d'instructions d'application avec la pluralité de schémas PQC sur la base de la catégorie d'algorithme en utilisant un mappeur de catégorie comprennent : la réception de la pluralité d'instructions d'application associées à chacune de la pluralité d'applications ;

l'identification d'une catégorie associée à chacun de la pluralité de schémas cryptographiques classiques correspondant à chacun de la pluralité d'instructions d'application en utilisant une correspondance de modèle ; et

l'obtention de la pluralité de schémas PQC, d'un niveau de sécurité associé et d'une valeur de risque associée se rapportant à chaque catégorie identifiée sur la base d'une pluralité d'exigences de sécurité d'entreprise, dans lequel la pluralité d'exigences de sécurité d'entreprise comprennent une arrivée moyenne d'attaques par unité de temps, un niveau de sécurité requis de l'instruction de code, un niveau de sécurité fourni par la pluralité de schémas PQC, un seuil de sécurité obligatoire et un temps d'exécution de l'instruction de code.

**15.** Un ou plusieurs supports de stockage d'informations lisibles par machine non transitoires selon la revendication **11,** dans lequel les étapes de calcul de la limite de conversion PQC pour chacune de la pluralité d'applications sur la base de la pluralité d'objectifs d'entreprise en utilisant un dispositif de réglage de limite basé sur une correspondance proportionnelle comprennent :

la réception d'un ensemble de données comprenant une pluralité d'applications historiques, dans lequel chacune de la pluralité d'applications historiques comprend la pluralité de schémas cryptographiques classiques, une pluralité associée d'objectifs d'entreprise historiques et une taille d'instruction associée à chacune d'une pluralité d'instructions d'application historiques ;

le regroupement de la pluralité de schémas cryptographiques classiques associés à la pluralité d'applications historiques sur la base d'une pluralité de catégories d'algorithmes cryptographiques ;
l'extraction d'une pluralité d'informations de relation pour chacun d'une pluralité de regroupements de catégories, dans lequel les informations de relation sont extraites entre la pluralité d'objectifs d'entreprise historiques et la taille d'instruction associée ; et

le calcul de la limite de conversion PQC pour chacune de la pluralité d'applications en divisant chacune de la pluralité d'informations de relation par une somme de la pluralité d'informations de relation associées à l'application correspondante.

100

FIG. 1A

Application Pipeline

| (A1) | (A2) | …… | (An) |

No ← All applications converted → Yes

1. PQC objective constraints for each application
2. Table (application, PQC objective constraints )

Quantum Secure Applications

**Analyzer()**: Analyze application () statements, list classical schemes & operations with (PQC objective values) requirements  120

Databases (algorithm, classical scheme, PQC schemes)

130

Recommendation module

Databases: Store PQC allocations for applications

**Category Mapper()**: determine "algorithm category" for classical scheme to map to PQC schemes and security levels in that category  122

**PQC Constraint Compliance** (): To minimally repair/change PQC allocations if overall non-compliance to PQC objective constraints is detected  128

Table (Category, Schemes, PQC objective limits

Table (Classical Scheme, PQC Scheme, Security Level)  126

**Limit Setter ()**: To estimate PQC objective limits for application for PQC conversion  124

**PQC Allocator ()**: To select best PQC schemes and levels to replace current application statements with classical schemes

FIG. 1B

200

receive an application pipeline for Post Quantum Cryptography (PQC) conversion, wherein each of a plurality of applications associated with the application pipeline for PQC conversion comprises a plurality of application statements — 202

identify a plurality of classical cryptographic schemes associated with each of the plurality of applications by analyzing each of the plurality of application statements and a plurality of enterprise objectives associated with each of the plurality of applications using an analyzer — 204

identify a plurality of potential classical cryptographic schemes for PQC conversion by mapping the plurality of classical cryptographic schemes associated with each of the plurality of application statements with a plurality of PQC schemes based on a plurality of application constraints, wherein the plurality of application constraints comprises an algorithm category, an associated security level and a risk value and, wherein the plurality of PQC schemes having similar algorithm category are selected only if (i) the associated security level is greater than a predefined security level threshold and (ii) the risk value greater than a predefined risk threshold — 206

computing a PQC conversion limit for each of the plurality of applications based on the plurality of enterprise objectives using a proportional matching based limit setter — 208

A

**FIG. 2A**

(A)

identify a plurality of potential PQC schemes from among the plurality of PQC schemes based on a plurality of application related parameters only if the enterprise objectives is less than the computed PQC conversion limit, wherein a plurality of security levels and a plurality of risk values associated with the identified plurality of potential PQC schemes are obtained   210

iteratively select a potential PQC scheme from among the plurality of potential PQC schemes based on the plurality of constraints, wherein the plurality of constraints comprises the associated plurality of enterprise objectives, the security level and the risk value   212

obtain an initial allocation for each of the plurality of applications by allocating each of the plurality of classical cryptographic schemes with the selected potential PQC scheme   214

iteratively obtain an optimal PQC scheme for each of the plurality of classical cryptographic schemes by (i) varying the security level associated with each of the plurality of potential PQC schemes until a predefined security threshold and (ii) by reducing enterprise objective values until the predefined objective threshold   216

update the initial allocation for each of the plurality of applications with plurality of optimal PQC schemes   218

provide recommendation as an alternative to each of the plurality of classical cryptographic schemes based on the plurality of optimal PQC schemes using a recommendation system   220

**FIG. 2B**

**Table (Scheme, (Objectives))**

Decide the category of the classical scheme for each statement of the application

**Database**
Public Key: RSA
Block Cipher: AES, DSA
Hash: SHA-1
Digital Signature: DSA

For the obtained category, list each PQC scheme with security levels available

**Database**
Public Key (Kyber512, Kyber768, Kyber1024)
Digital Signature (Dilithium2, Dilithium3, Dilithium5)
Block Cipher (AES256)
Hash (SHA384, SHA512)
Software Signature (LMS 256—192, XMSS)
Firmware Signature (Falcon)

PQC security level satisfies security req.

No

Yes

Include the security levels and risk values for that PQC scheme to the list of possible PQC options for classical schemes

Evaluated all application statements

No

Yes

Table (Algorithm category, Classical Scheme, {PQC options})

**FIG. 3**

Table (Algorithm category,
Classical Scheme, {PQC options})

Historical Dataset

Table (Category, Scheme, PQC
objective limits)

For each category , list all classical schemes in
the dataset for multiple applications

Extract relation between objectives and
message size (B) secured by schemes of that
category

Store the obtained equations for the category

Schemes under all
categories evaluated

No

Yes

Fetch the current application being evaluated

For each application statement with classical
scheme, estimate limits on PQC objectives

Store the estimated PQC objective limits for
each of that application

All code segments
evaluated

Yes

No

**FIG. 4**

Table (Category, Scheme, PQC objective limits)

All statement allocated to PQC schemes

Table (Classical Scheme, PQC Scheme, Security Level)

Yes

No

For each application statement with classical scheme, allocate it to PQC scheme with that security level such that the values of objectives are minimal

Change allocation for $(Sch_I{}^*)$

Check for next statement

Yes

Check for next statement

such security level found

yes

No

$$value(time) \leq e.time_{SchI}$$
$$value(mem) \leq e.mem_{SchI}$$

No

Find other security level for $(Sch_I{}^*)$ for the allocated PQC scheme such that:
1. Values of are reduced
2. For other objectives, ensure

List PQC objectives for which estimated values are exceeded

Select security level which reduces the value of desired objectives such that values of other objectives are minimally impacted (as per objective priority set by enterprise/user)

Select previously application statement $(Sch_I{}^*)$ with PQC scheme and level which minimally exceeds estimated limits for objectives

**FIG. 5**

Final Allocation: **Table (Classical Scheme, PQC Scheme, Security Level)***

Initial allocation: Table (Classical Scheme, PQC Scheme, Level) form PQC Allocator ()

Count number of PQC objectives violating corresponding constraints in the initial allocation

No

Yes

PQC objective(s) remaining for repair

For each such objective , list set of statements with PQC allocations in initial allocation such that $value(obj_z) > e.objz_{SchI}$

Change allocation for the statement such that now $value(obj_z) \leq e.objz_{SchI}$

Yes

Such security level found

For each scheme in , find new allocations (other security levels within the PQC scheme) such that is reduced; but other objectives not violating constraints in initial solution must not be impacted

No

Select security level which reduces the value of desired objectives such that values of other objectives are minimally impacted (as per objective priority set by enterprise)

**FIG. 6**

35

Application (A$_l$)

.....

.....

S$_a$: Crypto statement (RSA-1)

S$_b$ :S$_a$ Crypto statement (RSA-2)

...........

S$_\rho$ : Crypto statement (DES-1)

......

......

S$_t$ : Crypto statement (Hash-1)

......

......

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421021586
- US 11727829 B1

- WO 202321067239 A